(19) Europäisches Patentamt
European Patent Office
Office européen des brevets

(11) **EP 3 974 771 A1**

(12) **EUROPEAN PATENT APPLICATION**
published in accordance with Art. 153(4) EPC

(43) Date of publication:
**30.03.2022 Bulletin 2022/13**

(51) International Patent Classification (IPC):
***G01C 3/06*** (2006.01)       ***G06T 7/593*** (2017.01)

(21) Application number: **20810346.5**

(52) Cooperative Patent Classification (CPC):
**G01C 3/06; G06T 7/593**

(22) Date of filing: **10.04.2020**

(86) International application number:
**PCT/JP2020/016150**

(87) International publication number:
**WO 2020/235249 (26.11.2020 Gazette 2020/48)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **22.05.2019  JP 2019095888**

(71) Applicant: **Hitachi Astemo, Ltd.
Hitachinaka-shi Ibaraki 312-8503 (JP)**

(72) Inventors:
• **ISHII, Toshiki
Tokyo 100-8280 (JP)**
• **SHIMANO, Takeshi
Tokyo 100-8280 (JP)**
• **BETSUI, Keiichi
Tokyo 100-8280 (JP)**
• **YASUKAWA, Takakiyo
Hitachinaka-shi, Ibaraki 312-8503 (JP)**

(74) Representative: **Mewburn Ellis LLP
Aurora Building
Counterslip
Bristol BS1 6BX (GB)**

(54) **STEREO CAMERA SYSTEM AND DISTANCE MEASUREMENT METHOD**

(57)     To reduce a processing load for distance measurement of a stereo camera. A stereo camera system of the present disclosure includes: a plurality of distance measurement cameras that captures an image of an object present in an own angle of view range and performs distance measurement of the object; and an integration unit that sets a pair of the distance measurement cameras as a long-baseline-length stereo camera and measures a distance to the object based on an image captured by each of the pair of the distance measurement cameras, in which an image processing range of the distance measurement camera or the integration unit is changeable (see FIG. 15).

FIG. 15

EP 3 974 771 A1

**Description**

Technical Field

The present invention relates to a stereo camera system and a distance measurement method.

Background Art

Development and improvement of automatic driving, automatic braking, automatic following, and the like have been advanced as user support functions in automobiles. In order to implement these user support functions, a technique for detecting an object present around an automobile is commonly used, and in particular, for automatic driving, it is important to establish an object detection technique for the entire circumference (360° around) of the automobile.

As an object detection technique around the entire circumference of an automobile, a method using laser image-capturing detection and ranging (LIDAR) for detecting a distance to an object from a reflection return time of a laser pulse is known.

In addition, a method of measuring a distance to an object using a stereo camera is also known. For example, PTL 1 discloses an image forming device in which a plurality of stereo camera units are arranged in a vehicle body, the distance of arrangement between the stereo camera units is set longer than the baseline length of the single stereo camera unit, and short baseline length image pickup by the single stereo camera unit and long baseline length image pickup by a stereo camera unit constituted of a pair of the stereo camera units can be performed.

Citation List

Patent Literature

PTL 1: JP 2006-33282 A

Summary of Invention

Technical Problem

However, in the case of the method using LIDAR, an image cannot be acquired only by LIDAR, it is hence necessary to use a camera capable of capturing an image together in order to recognize what the detected object is. In the case where an automobile present in the surroundings also uses LIDAR, there is a possibility that laser beams interfere with each other.

In the image forming device described in PTL 1, the image processing of short baseline length image pickup and long baseline length image pickup are individually performed, and the processing load for distance measurement increases.

The present disclosure has been made in view of such a situation, and proposes a technique for reducing a processing load for distance measurement of a long-baseline-length stereo camera.

Solution to Problem

The present application includes a plurality of means for solving at least a part of the above problem, and an example thereof is as follows. In order to solve the above problem, a stereo camera system according to one aspect of the present disclosure includes: a plurality of distance measurement cameras that captures an image of an object present in an own angle of view range and performs distance measurement of the object; and an integration unit that sets a pair of the distance measurement cameras as a long-baseline-length stereo camera and measures a distance to the object based on an image captured by each of the pair of the distance measurement cameras, in which an image processing range of the distance measurement camera or the integration unit is changeable.

Further features related to the present disclosure will become apparent from the description herein and the accompanying drawings. Aspects of the present disclosure are achieved and implemented by elements, combinations of various elements, and aspects of the subsequent detailed description and the appended claims.

It should be understood that the description herein is merely exemplary and does not limit the scope of claims or applications of the present disclosure in any way.

Advantageous Effects of Invention

According to the technique of the present disclosure, it is possible to reduce the calculation load of a long-baseline-length stereo camera.

Brief Description of Drawings

[FIG. 1] FIG. 1 is a view illustrating a configuration example of a stereo camera system that is a first embodiment.
[FIG. 2] FIG. 2 is a block diagram illustrating a detailed configuration example of the stereo camera system.
[FIG. 3] FIG. 3 is a view illustrating an example of a positional relationship between a first image-capturing unit and a second image-capturing unit in a distance measurement camera.
[FIG. 4] FIG. 4 is a view illustrating an example of a positional relationship between two distance measurement cameras regarded as stereo cameras.
[FIG. 5] FIG. 5 is a view illustrating distance measurement accuracy with respect to a distance of a long-baseline-length stereo camera and a distance measurement camera alone.
[FIG. 6] FIG. 6 is a view illustrating distance measurement accuracy with respect to a distance of the long-baseline-length stereo camera and the distance measurement camera alone.
[FIG. 7] FIG. 7 is a view illustrating distance measurement accuracy with respect to a distance of the long-baseline-length stereo camera and the distance measurement camera alone.
[FIG. 8] FIG. 8 is a flowchart explaining an example of an operation by the stereo camera system.
[FIG. 9] FIG. 9 is a view illustrating a configuration example of an in-vehicle stereo camera system that is a second embodiment.
[FIG. 10] FIG. 10 is a view illustrating an angle of view range of each distance measurement camera in the in-vehicle stereo camera system.
[FIG. 11] FIG. 11 is a view illustrating a range in which a distance measurement result of each distance measurement camera alone is adopted in the in-vehicle stereo camera system.
[FIG. 12] FIG. 12 is a view illustrating a configuration example of a stereo camera that can be adopted as a distance measurement camera.
[FIG. 13] FIG. 13 is a cross-sectional view illustrating a relationship among an upper hyperboloid mirror, an outer peripheral hyperboloid mirror, and an inner peripheral hyperboloid mirror.
[FIG. 14] FIG. 14 is a view illustrating an example of parameters of each hyperboloid mirror.
[FIG. 15] FIG. 15 is a view illustrating image processing of a stereo camera system according to a third embodiment.
[FIG. 16] FIG. 16 is a block diagram illustrating a detailed configuration example of the stereo camera system according to the third embodiment.
[FIG. 17] FIG. 17 is a flowchart explaining an example of an operation by the stereo camera system according to the third embodiment.
[FIG. 18] FIG. 18 is a view illustrating image processing of a stereo camera system according to a fourth embodiment.
[FIG. 19] FIG. 19 is a block diagram illustrating a detailed configuration example of the stereo camera system according to the fourth embodiment.
[FIG. 20] FIG. 20 is a flowchart explaining an example of an operation by the stereo camera system according to the fourth embodiment.
[FIG. 21] FIG. 21 is a view illustrating image processing of a stereo camera system according to a fifth embodiment.
[FIG. 22] FIG. 22 is a block diagram illustrating a detailed configuration example of the stereo camera system according to the fifth embodiment.
[FIG. 23] FIG. 23 is a flowchart explaining an example of an operation by the stereo camera system according to the fifth embodiment.
[FIG. 24] FIG. 24 is a view illustrating an angle of view range of an in-vehicle stereo camera system that is a sixth embodiment in a horizontal direction with respect to a road surface.
[FIG. 25] FIG. 25 is a view illustrating an angle of view range of the in-vehicle stereo camera system that is the sixth embodiment in a direction perpendicular to the road surface.
[FIG. 26] FIG. 26 is a view illustrating an angle of view range of an in-vehicle stereo camera system that is a seventh embodiment in a horizontal direction with respect to a road surface.
[FIG. 27] FIG. 27 is a view illustrating an angle of view range of the in-vehicle stereo camera system that is the seventh embodiment in a direction perpendicular to the road surface.
[FIG. 28] FIG. 28 is a view illustrating a configuration example of an in-vehicle stereo camera system that is an eighth embodiment.

[FIG. 29] FIG. 29 is a block diagram illustrating a detailed configuration example of the stereo camera system that is the eighth embodiment.
[FIG. 30] FIG. 30 is a flowchart explaining an example of an operation by the in-vehicle stereo camera system that is the eighth embodiment.
[FIG. 31] FIG. 31 is a flowchart explaining an example of an operation by an in-vehicle stereo camera system that is a ninth embodiment.
[FIG. 32] FIG. 32 is a view indicating distance measurement accuracy with respect to a distance to an object by a long-baseline-length stereo camera and a forward distance measurement camera.

Description of Embodiments

A plurality of embodiments according to the technique of the present disclosure will be described below with reference to the drawings. Note that in all the drawings for explaining the embodiments, the same members are given the same reference signs in principle, and the repetition of the explanation will be omitted.

In the following embodiments, it is needless to say that the components (including element steps) are not necessarily essential, unless otherwise specified or except a case of being considered to be obviously essential in principle.

It is needless to say that the expressions "made up from A", "made up of A", "having A", and "including A" do not exclude other elements except for a case where only the element is specifically stated.

Similarly, in the following embodiments, where the shape, positional relationship, and the like of the components and the like are mentioned, the components and the like include those that are substantially approximate or similar to the shape and the like, unless otherwise specified or except a case of being considered obviously otherwise in principle.

(1) First Embodiment

<Configuration Example of Stereo Camera System>

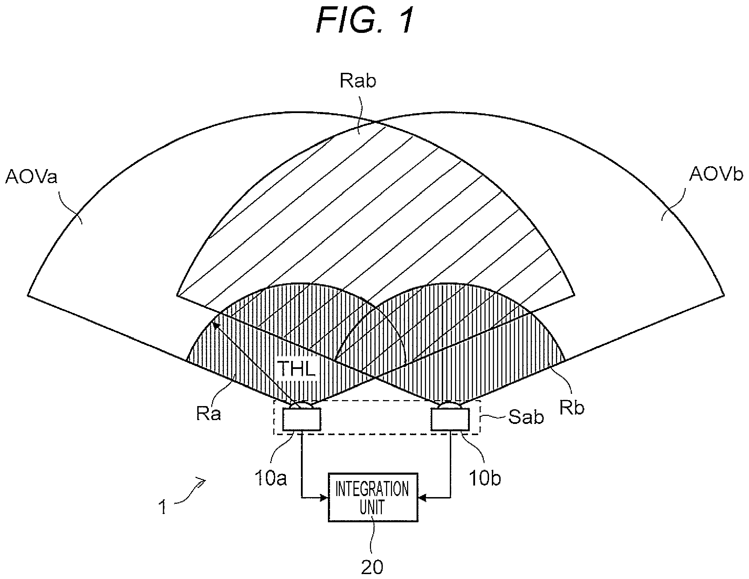

FIG. 1 is a view illustrating a configuration example of a stereo camera system 1 that is the first embodiment. The stereo camera system 1 includes distance measurement cameras 10a and 10b and an integration unit 20.

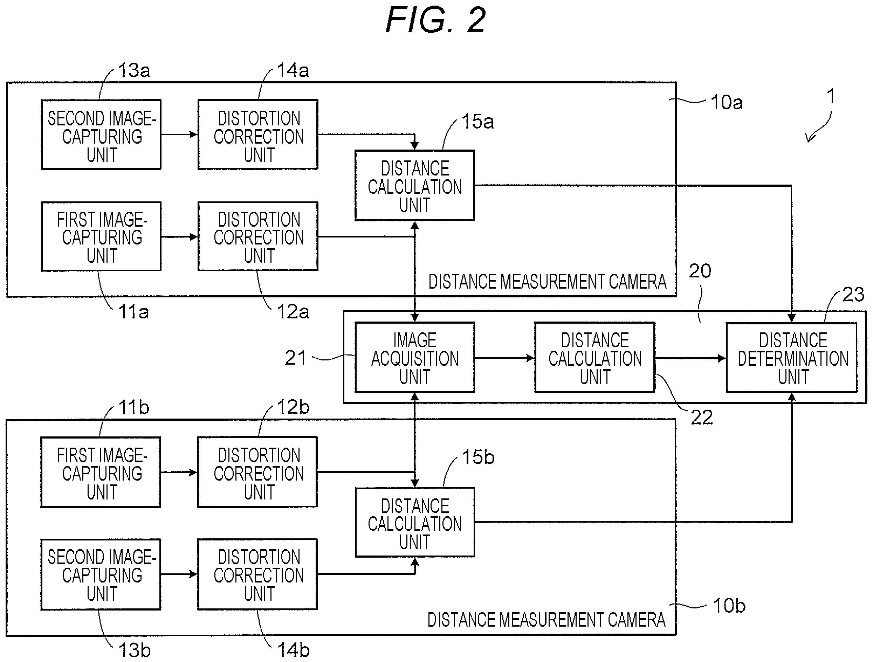

The distance measurement camera 10a includes a stereo camera having a first image-capturing unit 11a (FIG. 2) and a second image-capturing unit 13a (FIG. 2) arranged in a direction perpendicular to the road surface (direction perpendicular to the figure), for example. The distance measurement camera 10a captures an image of an angle of view range AOVa and outputs an image obtained as an image-capturing result to the integration unit 20. The distance measurement camera 10a alone has a function of measuring a distance (measuring a distance) of an object present in the angle of view range AOVa, and outputs a distance measurement result to the integration unit 20. Note that the distance measurement camera 10a can be implemented by, for example, a time of flight (TOF) camera, a monocular camera using an image analysis method called optical flow, and the like, in addition to the stereo camera.

Similarly, the distance measurement camera 10b includes a stereo camera having a first image-capturing unit 11b (FIG. 2) and a second image-capturing unit 13b (FIG. 2) arranged in a direction perpendicular to the road surface, for example. The distance measurement camera 10b captures an image of an angle of view range AOVb and outputs an image obtained as an image-capturing result to the integration unit 20. The distance measurement camera 10b alone has a function of measuring a distance to an object present in the angle of view range AOVb, and outputs a distance measurement result to the integration unit 20.

Note that the distance measurement camera 10b can be implemented by, for example, a TOF camera, a monocular camera using an image analysis method called optical flow, and the like, in addition to the stereo camera.

Hereinafter, in the case where it is not necessary to distinguish the distance measurement cameras 10a and 10b from each other, they are simply referred to as a distance measurement camera 10.

The integration unit 20 regards the pair of distance measurement cameras 10 (distance measurement cameras 10a and 10b) as one long-baseline-length stereo camera Sab and measures the distance to the object.

That is, the integration unit 20 acquires an image captured by each of the distance measurement camera 10a and the distance measurement camera 10b, and, by stereo matching processing using the acquired images, measures the distance to an object present in an overlapping region Rab where the angle of view range AOVa of the distance measurement camera 10a and the angle of view range AOVb of the distance measurement camera 10b overlap. Of course, the long-baseline-length stereo camera Sab cannot measure the distance to an object that is not present in the overlapping region Rab.

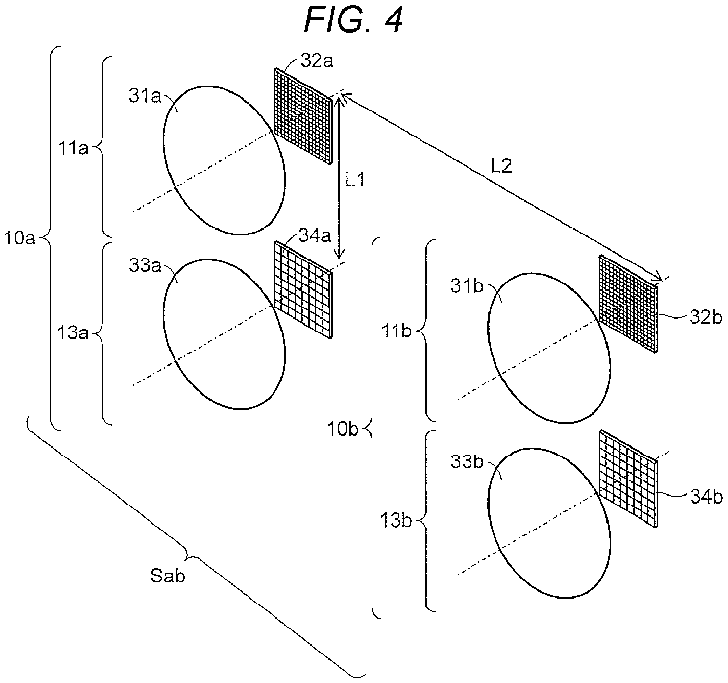

A baseline length L2 (FIG. 4) of the long-baseline-length stereo camera Sab becomes longer than a baseline length L1 (FIG. 4) of the distance measurement camera 10 alone, it is thus possible to increase the distance measurement accuracy with respect to the object present farther than a predetermined distance as compared with the distance measurement camera 10 alone.

Then, the integration unit 20 sets a predetermined distance at a boundary where the distance measurement accuracy of the long-baseline-length stereo camera Sab becomes higher than that of the distance measurement camera 10 alone as a distance threshold THL, adopts a distance measurement result by the long-baseline-length stereo camera Sab for an object present farther than the distance threshold THL from the distance measurement camera 10 among objects present in the overlapping region Rab, and adopts a distance measurement result by the distance measurement camera 10 alone for an object present in regions Ra and Rb closer than the distance threshold THL.

The integration unit 20 adopts a distance measurement result of the distance measurement camera 10 alone for an object for which the distance cannot be measured by the long-baseline-length stereo camera Sab.

By measuring the distance to an object whose accurate distance is known, the integration unit 20 executes self-calibration of the long-baseline-length stereo camera Sab based on a difference between the accurate distance and the distance measurement result.

Note that, although the case of FIG. 1 is different, the distance measurement camera 10b may be arranged in the angle of view range AOVa of the distance measurement camera 10a, and the integration unit 20 may determine and correct the baseline length of the long-baseline-length stereo camera Sab and the inclination thereof based on an image captured by the distance measurement camera 10a, the image in which the distance measurement camera 10b appears.

Next, FIG. 2 is a block diagram illustrating a detailed internal configuration example of the stereo camera system 1. Note that, in the configuration example of FIG. 2, the distance measurement camera 10 is a stereo camera having a first image-capturing unit 11 and a second image-capturing unit 13.

The distance measurement camera 10 has the first image-capturing unit 11, a distortion correction unit 12, the second image-capturing unit 13, a distortion correction unit 14, and a distance calculation unit 15.

Hereinafter, the first image-capturing unit 11 of the distance measurement camera 10a will be referred to as a first image-capturing unit 11a where a is added to the reference sign. The same applies to other components. The same applies to the distance measurement camera 10b.

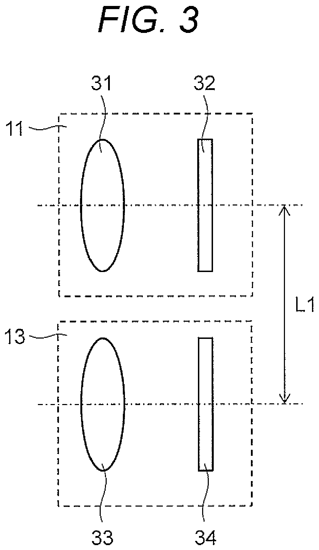

The first image-capturing unit 11 has, for example, a light condensing unit 31 (FIG. 3) including a wide-angle lens and a fisheye lens, and a high-resolution image sensor 32 (FIG. 3) including a complementary metal oxide semiconductor (CMOS). In the first image-capturing unit 11, the light condensing unit 31 condenses the light of the object onto the high-resolution image sensor 32, and generates a first image by photoelectric conversion on the high-resolution image sensor 32. The first image-capturing unit 11 outputs the first image to the distortion correction unit 12. The distortion correction unit 12 corrects image distortion occurring in the first image and outputs it to the distance calculation unit 15.

The second image-capturing unit 13 has, for example, a light condensing unit 33 (FIG. 3) including a wide-angle lens and a fisheye lens, and a low-resolution image sensor 34 (FIG. 3) including a CMOS. In the second image-capturing unit 13, the light condensing unit 33 condenses the light of the object onto the low-resolution image sensor 34, and generates a second image by photoelectric conversion on the low-resolution image sensor 34. The second image-capturing unit 13 outputs the second image to the distortion correction unit 14. The distortion correction unit 14 corrects image distortion occurring in the second image and outputs it to the distance calculation unit 15.

FIG. 3 illustrates an example of the positional relationship between the first image-capturing unit 11 and the second image-capturing unit 13 in the distance measurement camera 10. As illustrated in the figure, the first image-capturing unit 11 and the second image-capturing unit 13 are arranged apart from each other in a direction perpendicular to the road surface by the baseline length L1 (for example, several cm). Since the first image-capturing unit 11 and the second image-capturing unit 13 have a common angle of view range in a direction horizontal with respect to the road surface, the occurrence of occlusion can be suppressed.

Note that the high-resolution image sensor 32 of the first image-capturing unit 11 and the low-resolution image sensor 34 of the second image-capturing unit 13 have different resolutions.

Therefore, the first image obtained from the high-resolution image sensor 32 has a higher resolution than that of the second image obtained from the low-resolution image sensor 34.

Note that, since the low-resolution image sensor 34 is cheaper in price than the high-resolution image sensor 32, the production cost can be reduced accordingly. However, the resolution of the high-resolution image sensor 32 and the resolution of the low-resolution image sensor 34 may be unified.

Return to FIG. 2. The distance calculation unit 15 calculates the distance to an object appearing in both the first image and the second image by stereo matching processing based on the first image and the second image in which image distortion has been corrected, and outputs the distance to a distance determination unit 23.

Since the distance measurement camera 10b is configured similarly to the distance measurement camera 10a, the description thereof will be omitted.

FIG. 4 illustrates an example of the positional relationship between the first image-capturing unit 11a and the second image-capturing unit 13a of the distance measurement camera 10a and the first image-capturing unit 11b and the second image-capturing unit 13b of the distance measurement camera 10b.

The distance measurement camera 10a and the distance measurement camera 10b, which constitute the long-baseline-length stereo camera Sab, are arranged apart by, for example, several meters in a direction horizontal with respect to the road surface.

Therefore, the baseline length L2 of the long-baseline-length stereo camera Sab also becomes several meters, which becomes longer than the baseline length L1 of the distance measurement camera 10 alone.

Hence, the long-baseline-length stereo camera Sab can implement high distance measurement accuracy as compared with the distance measurement camera 10 alone.

Return to FIG. 2. The integration unit 20 includes, for example, a central processing unit (CPU), a memory, and a communication I/F, and implements each function block of an image acquisition unit 21, a distance calculation unit 22, and the distance determination unit 23.

The image acquisition unit 21 acquires a high-resolution first image a from a distortion correction unit 12a of the distance measurement camera 10a, acquires a high-resolution first image b from a distortion correction unit 12b of the distance measurement camera 10b, and outputs them to the distance calculation unit 22. Based on the two first images a and b, the distance calculation unit 22 calculates the distance to the object appearing in both of the first images a and b by stereo matching processing, and outputs the distance to the distance determination unit 23.

Note that the image acquisition unit 21 may acquire low-resolution second images a and b from the distance measurement cameras 10a and 10b, and the distance calculation unit 22 may calculate the distance to the object based on the second images a and b. However, use of the high-resolution first images a and b enables stereo matching processing to be performed with higher accuracy as compared with the case of using the low-resolution second images a and b, and it is therefore possible to obtain higher accuracy than that of the obtained distance measurement result.

The distance determination unit 23 determines to adopt the distance measurement result by the distance measurement camera 10 alone for an object whose measurement result is less than the distance threshold THL (for example, 10 m), and to adopt the distance measurement result by the long-baseline-length stereo camera Sab, i.e., the calculation result by the distance calculation unit 22, for an object whose measurement result is equal to or greater than the distance threshold THL.

The distance determination unit 23 also determines to adopt the distance measurement result by the distance measurement camera 10 alone for an object whose distance cannot be measured by the long-baseline-length stereo camera Sab.

In the case where one of the distance measurement camera 10 alone and the long-baseline-length stereo camera Sab fails to obtain the distance measurement result and the other can obtain the distance measurement result due to some cause (case where stereo matching cannot be performed, case of failure, or the like), the distance determination unit 23 determines to adopt the other distance measurement result. Then, the distance determination unit 23 outputs the distance measurement result corresponding to the determination result to a predetermined device (not illustrated) or the like.

Note that, for the distance to the object present in the overlapping region Rab that can be measured by both the distance measurement camera 10 alone and the long-baseline-length stereo camera Sab, a predetermined calculation value (for example, the weighted average value) using the distance measurement result by the distance measurement camera 10 alone and the distance measurement result by the long-baseline-length stereo camera Sab may be adopted.

The distance measurement result of the object output to the predetermined device may be displayed on a display as, for example, a 3D image, may be supplied to an electronic control unit (ECU) of the automobile equipped with the stereo camera system 1, or may be transmitted to a predetermined server.

<Distance Measurement Accuracy with Respect to Distance to Object>

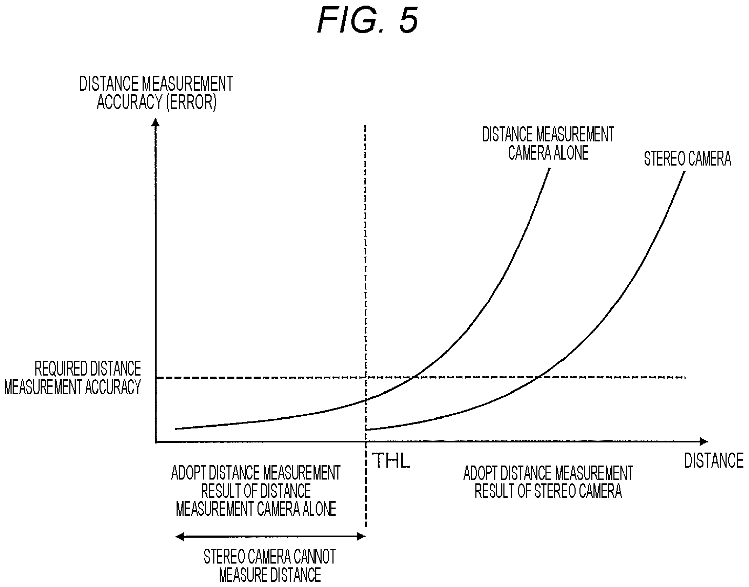

Next, FIGS. 5 to 7 indicate the distance measurement accuracy with respect to the distance to the object by the long-baseline-length stereo camera Sab and the distance measurement camera 10 alone. Note that the horizontal axis in each figure indicates the actual distance to the object that becomes the target whose distance is measured, and the vertical axis indicates the distance measurement accuracy. Here, the distance measurement accuracy indicates an error of the distance measurement result with respect to the actual distance in percentage, and in each figure, the smaller the value is, the higher the distance measurement accuracy is.

FIG. 5 illustrates a case where the long-baseline-length stereo camera Sab cannot perform distance measurement by occlusion for an object present closer than the predetermined distance (distance threshold THL) indicated by a broken line parallel to the vertical axis, and the long-baseline-length stereo camera Sab has higher distance measurement accuracy than that of the distance measurement camera 10 alone for an object present farther than the predetermined distance.

In such a case, the predetermined distance is set as the distance threshold THL, the distance measurement result by the distance measurement camera 10 alone is adopted for the object present closer than the distance threshold THL, and the distance measurement result by the long-baseline-length stereo camera Sab is adopted for the object present farther than the distance threshold THL. At this time, it is also possible to perform the distance measurement by operating only the distance measurement camera at normal times, for example, and operating the long baseline stereo camera only when it is determined that the distance measurement is necessary at a far distance that does not satisfy the required distance measurement accuracy.

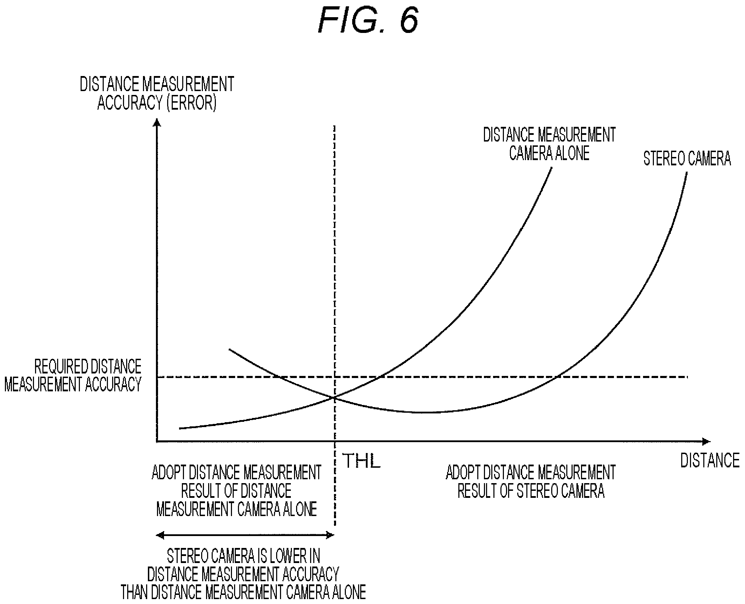

FIG. 6 illustrates a case where the distance measurement accuracy of the distance measurement camera 10 alone is higher than that of the long-baseline-length stereo camera Sab for an object present closer than the predetermined distance (distance threshold THL) indicated by a broken line parallel to the vertical axis, and the distance measurement accuracy of the long-baseline-length stereo camera Sab is higher than that of the distance measurement camera 10 alone for an object present farther than the distance threshold THL. Even in such a case, the predetermined distance is set as the distance threshold THL, the distance measurement result by the distance measurement camera 10 alone is adopted for the object present closer than the distance threshold THL, and the distance measurement result by the long-baseline-length stereo camera Sab is adopted for the object present farther than the distance threshold THL.

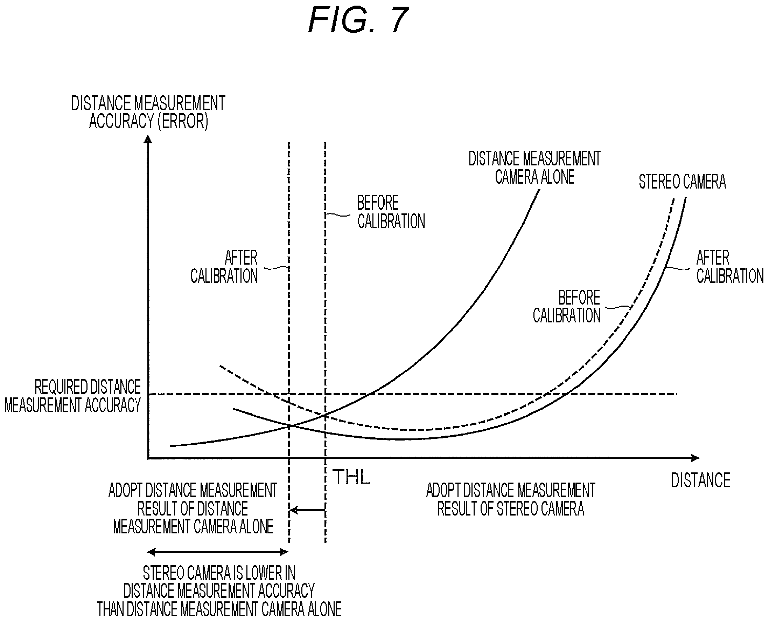

FIG. 7 illustrates distance measurement accuracy before and after self-calibration by the integration unit 20. After the self-calibration, the predetermined distance indicated by the broken line parallel to the vertical axis in which the superiority and inferiority between the distance measurement accuracy of the distance measurement camera 10 alone and the distance measurement accuracy of the long-baseline-length stereo camera Sab are reversed changes, and thus the distance threshold THL is also changed after the self-calibration. Note that, in the figure, the self-calibration is performed only for the long-baseline-length stereo camera Sab, but the self-calibration may be performed as the distance measurement camera 10 alone.

<Operation of Stereo Camera System 1>

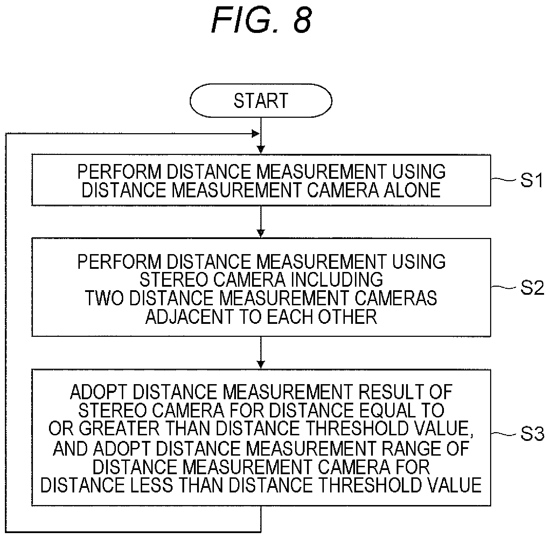

Next, FIG. 8 is a flowchart for explaining an example of the operation by the stereo camera system 1. In the following description, each processing unit (integration unit 20, image acquisition unit 21, distance calculation unit 22, distance determination unit 23, and the like) is the operation subject, but in the case where the operation of the stereo system 1 is implemented by a program, a travel control ECU or another processor (computer) may be the operation subject (hereinafter, the same applies to the operation description based on the flowchart in each embodiment).

This operation is started in response to a predetermined operation from the user, for example.

First, each of the distance measurement cameras 10a and 10b alone measures the distance to an object present in its own angle of view range, and outputs the distance measurement result to the integration unit 20 (step S1).

Specifically, in the distance measurement camera 10a, the first image-capturing unit 11a captures an image of the angle of view range AOVa, and outputs the first image a obtained as a result to the distortion correction unit 12a, and the distortion correction unit 12a corrects the image distortion generated in the first image a and outputs it to a distance calculation unit 15a.

At the same time, the second image-capturing unit 13a captures an image of the angle of view range AOVa, and outputs the second image a obtained as a result to the distortion correction unit 14a, and the distortion correction unit 14a corrects the image distortion generated in the second image a and outputs it to the distance calculation unit 15a.

Based on the first image a and the second image a in which the image distortion has been corrected, the distance calculation unit 15a calculates the distance to an object appearing in both the first image a and the second image a by stereo matching processing and outputs the distance to the distance determination unit 23.

Note that the distance measurement camera 10b also executes simultaneously the same operation as that of the distance measurement camera 10a described above, but the description thereof will be omitted.

Next, the integration unit 20 regards the distance measurement cameras 10a and 10b as one long-baseline-length stereo camera Sab and measures the distance to the object (step S2).

Specifically, the image acquisition unit 21 of the integration unit 20 acquires the high-resolution first image a from the distortion correction unit 12a of the distance measurement camera 10a and the high-resolution first image b from the distortion correction unit 12b of the distance measurement camera 10b, and outputs the first image a and the first image b to the distance calculation unit 22. Then, based on the high-resolution first images a and b in which the image distortion has been corrected, the distance calculation unit 22 calculates the distance to the object appearing in both of the first images a and b, i.e., present in the overlapping region Rab (FIG. 1) by the stereo matching processing, and outputs the distance to the distance determination unit 23.

Next, the distance determination unit 23 determines to adopt the distance measurement result by the long-baseline-length stereo camera Sab for the object whose measurement result is equal to or more than the distance threshold THL, and determines to adopt the distance measurement result calculated by the distance measurement camera 10a or 10b alone for the object whose measurement result is less than the distance threshold THL. Then, the distance determination unit 23 outputs the distance measurement result corresponding to the determination result to a predetermined device (not illustrated) or the like (step S3).

Thereafter, the processing returns to step S1, and steps S1 to S3 are repeatedly executed until an operation instructing the end of the operation, for example, is input from the user.

As described above, according to the stereo camera system 1, it is possible to accurately perform distance measurement of an object present in the angle of view range of the two distance measurement cameras 10 according to the distance.

(2) Second Embodiment

<Configuration Example of In-Vehicle Stereo Camera System>

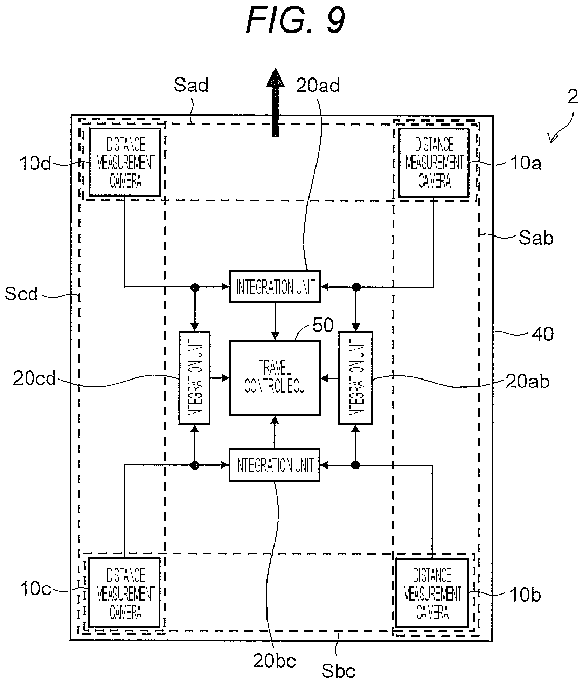

Next, FIG. 9 is a view illustrating a configuration example of an in-vehicle stereo camera system 2 that is the second embodiment. Note that, among the components of the in-vehicle stereo camera system 2, those common to the components of the stereo camera system 1 (FIG. 2) are given the same reference signs, and the description thereof will be omitted as appropriate.

The in-vehicle stereo camera system 2 is mounted on an automobile 40. The in-vehicle stereo camera system 2 is for detecting an object present in the entire circumference of the automobile 40.

The in-vehicle stereo camera system 2 includes distance measurement cameras 10a, 10b, 10c, and 10d, and integration units 20ab, 20bc, 20cd, and 20ad.

The distance measurement cameras 10a to 10d can be arranged at the four corners of the automobile 40. That is, for example, the distance measurement camera 10a is arranged at the right front corner of the automobile 40 toward the right front direction, the distance measurement camera 10b is arranged at the right rear corner of the automobile 40 toward the right rear direction, the distance measurement camera 10c is arranged at the left rear corner of the automobile 40 toward the left rear direction, and the distance measurement camera 10d is arranged at the left front corner of the automobile 40 toward the left front direction.

However, the arrangement of the distance measurement cameras 10a to 10d is not limited to the above-described example, and may be arranged, for example, in a portion protruding from the vehicle body such as a door mirror.

The integration units 20ab, 20bc, 20cd, and 20ad are configured similarly to the integration unit 20 (FIG. 2).

The integration unit 20ab is connected to the distance measurement cameras 10a and 10b, and acquires a distance measurement result from each of the distance measurement cameras 10a and 10b alone. The integration unit 20ab regards the distance measurement cameras 10a and 10b as the long-baseline-length stereo camera Sab and measures the distance to the object. Then, the integration unit 20ab outputs, to a travel control ECU 50, the distance measurement result as each of the distance measurement cameras 10a and 10b alone or the distance measurement result by the long-baseline-length stereo camera Sab.

The integration unit 20bc is connected to the distance measurement cameras 10b and 10c, and acquires a distance measurement result from each of the distance measurement cameras 10b and 10c alone. The integration unit 20bc regards the distance measurement cameras 10b and 10c as a long-baseline-length stereo camera Sbc and measures the distance to the object. Then, the integration unit 20bc outputs, to a travel control ECU 50, the distance measurement result as each of the distance measurement cameras 10b and 10c alone or the distance measurement result by the long-baseline-length stereo camera Sbc.

The integration unit 20cd is connected to the distance measurement cameras 10c and 10d, and acquires a distance measurement result from each of the distance measurement cameras 10c and 10d alone. The integration unit 20cd regards the distance measurement cameras 10c and 10d as a long-baseline-length stereo camera Scd and measures the distance to the object. Then, the integration unit 20cd outputs, to a travel control ECU 50, the distance measurement result as each of the distance measurement cameras 10c and 10d alone or the distance measurement result by the long-baseline-length stereo camera Scd.

The integration unit 20ad is connected to the distance measurement cameras 10a and 10d, and acquires a distance measurement result from each of the distance measurement cameras 10a and 10d alone. The integration unit 20ad regards the distance measurement cameras 10a and 10d as a long-baseline-length stereo camera Sad and measures the distance to the object.

Then, the integration unit 20ad outputs, to a travel control ECU 50, the distance measurement result as each of the distance measurement cameras 10a and 10d alone or the distance measurement result by the long-baseline-length stereo camera Sad.

Therefore, in the in-vehicle stereo camera system 2, four long-baseline-length stereo cameras are implemented by the four distance measurement cameras 10.

The travel control ECU 50 included in the automobile 40 controls various functions in the automobile 40. For example, the travel control ECU 50 detects an object present in the entire circumference based on the distance measurement result input from each integration unit 20, and implements the automatic driving function, the automatic braking function, the automatic following function, and the like.

Note that the integration units 20ab, 20bc, 20cd, and 20ad may be formed integrally with the distance measurement cameras 10 connected thereto respectively. The travel control ECU 50 may be caused to execute the operations by the integration units 20ab, 20bc, 20cd, and 20ad.

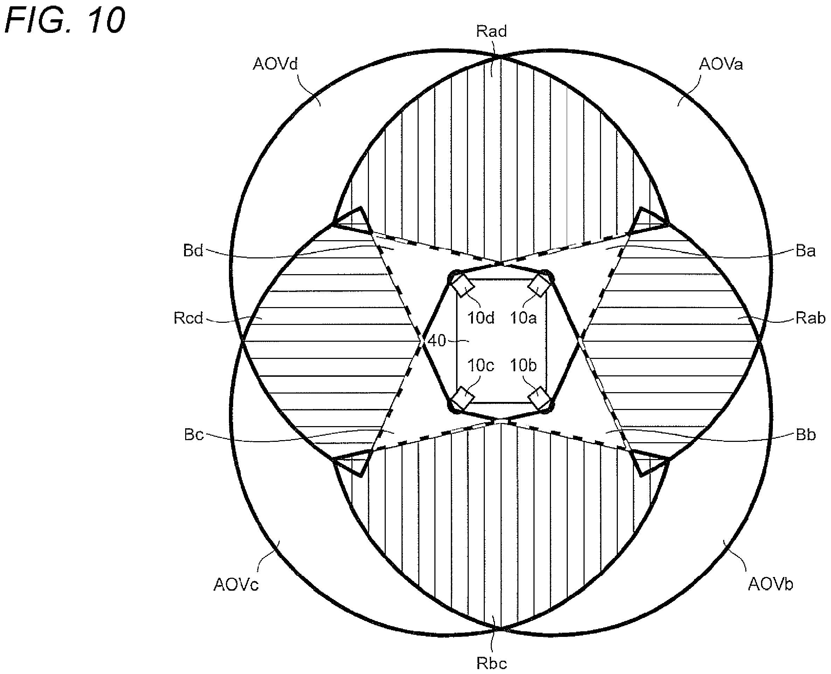

Next, FIG. 10 illustrates the angle of view range of each distance measurement camera 10 in the in-vehicle stereo camera system 2.

Note that each distance measurement camera 10 in the in-vehicle stereo camera system 2 has a wider angle of view than that of each distance measurement camera 10 in the stereo camera system 1 (FIG. 1), and has an angle of view range of about 240°, for example.

When focusing on the distance measurement camera 10a arranged at the right front corner of the automobile 40, the overlapping region Rab overlapping with the angle of view range AOVb of the distance measurement camera 10b arranged at the right rear corner of the automobile 40, an overlapping region Rad overlapping with an angle of view range AOVd of the distance measurement camera 10d arranged at the left front corner of the automobile 40, and an occlusion region Ba in which the angle of view ranges AOVb and AOVd do not overlap are generated in the angle of view range AOVa.

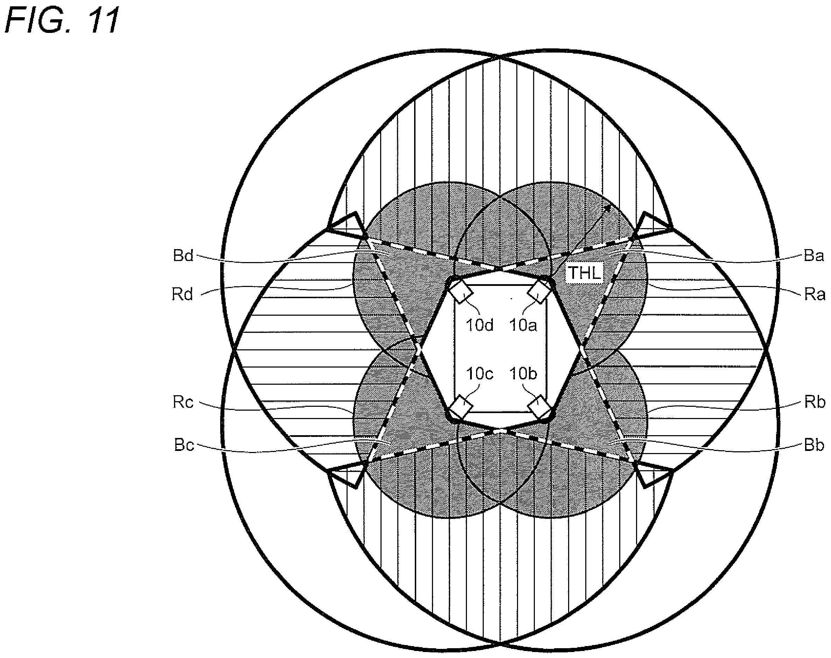

The object present in the overlapping region Rab can be measured in distance by the distance measurement camera 10a alone, and can be measured in distance by the long-baseline-length stereo camera Sab including the distance measurement cameras 10a and 10b. The object present in the overlapping region Rad can be measured in distance by the distance measurement camera 10a alone, and can be measured in distance by the long-baseline-length stereo camera Sad including the distance measurement cameras 10a and 10d. The object present in the occlusion region Ba can be measured in distance only by the distance measurement camera 10a alone. Therefore, as illustrated in FIG. 11, the integration unit 20ab is only required to set the distance threshold THL that defines the range Ra where the distance measurement result by the distance measurement camera 10a alone is adopt to a value larger than the farthest distance of the occlusion region Ba from the distance measurement camera 10a.

Then, the integration unit 20ab is only required to determine to adopt the distance measurement result by the long-baseline-length stereo camera Sab for the object whose measurement result is equal to or more than the distance threshold THL, determine to adopt the distance measurement result by the distance measurement camera 10a alone for the object whose measurement result is less than the distance threshold THL, and output the distance measurement result corresponding to the determination result to the travel control ECU 50.

Since the case of focusing on the distance measurement cameras 10b to 10d is similar to the case of focusing on the distance measurement camera 10a described above, the description thereof will be omitted.

As described above, according to the in-vehicle stereo camera system 2, it is possible to accurately perform distance measurement of an object present in the entire circumference of the automobile 40 according to the distance.

<Modification of Distance Measurement Camera 10>

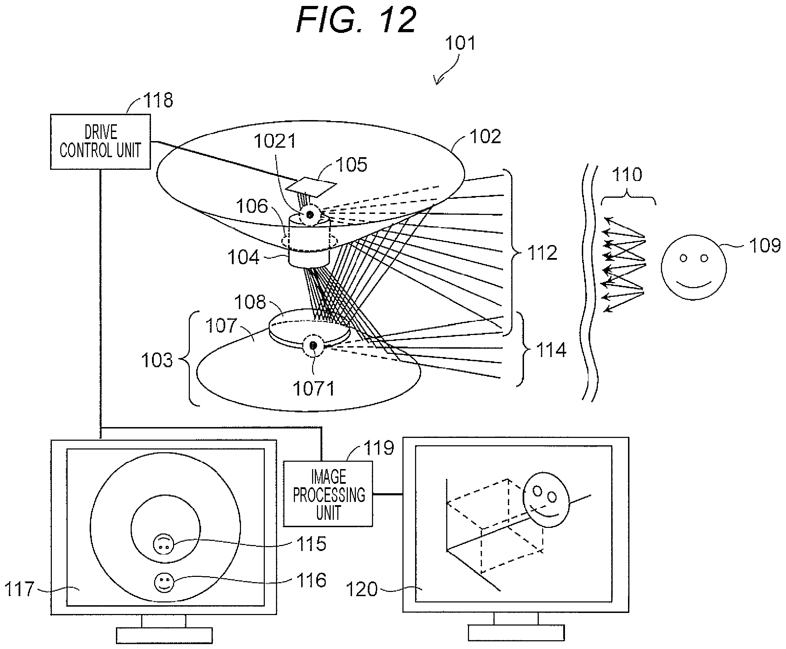

FIG. 12 illustrates a configuration example of a stereo camera 101 that can be adopted as the distance measurement camera 10.

The stereo camera 101 includes an upper hyperboloid mirror 102, a lower hyperboloid mirror 103, an imaging optical system 104, an image sensor 105, a drive control unit 118, and an image processing unit 119.

The upper hyperboloid mirror 102 and the lower hyperboloid mirror 103 are mirrors having a convex hyperboloid. The upper hyperboloid mirror 102 and the lower hyperboloid mirror 103 have a common central axis, and are arranged up-down with a predetermined interval in an orientation where the vertices of each of them face each other.

The upper hyperboloid mirror 102 has an opening 106 at the vertex portion.

The lower hyperboloid mirror 103 includes an outer peripheral hyperboloid mirror 107 and an inner peripheral hyperboloid mirror 108 having a common central axis and different curvatures. The boundary between the outer peripheral hyperboloid mirror 107 and the inner peripheral hyperboloid mirror 108 may have some level differences.

The imaging optical system 104 includes one or more lenses and is arranged in the opening 106. The imaging optical system 104 converges the light reflected by the lower hyperboloid mirror 103 and causes the light to be incident on the image sensor 105.

The image sensor 105 includes, for example, a CMOS, and, under the control of the drive control unit 118, generates an output image 117 based on the light incident via the imaging optical system 104, and outputs the output image 117 to the drive control unit 118.

The drive control unit 118 controls driving of the image sensor 105. The drive control unit 118 supplies the output image 117 output from the image sensor 105 to the image processing unit 119. The image processing unit 119 generates three-dimensional position information 120 of a subject 109 based on the supplied output image 117.

Here, general properties of the hyperboloid mirror constituting the upper hyperboloid mirror 102, the outer peripheral hyperboloid mirror 107, and the inner peripheral hyperboloid mirror 108 will be described.

The hyperboloid of each of the upper hyperboloid mirror 102, the outer peripheral hyperboloid mirror 107, and the inner peripheral hyperboloid mirror 108 corresponds to a case where a cone constant $\kappa$ is smaller than -1 in a quadric surface expressed by the following Expression (1).

[Expression 1]

$$z(r) = \frac{cr^2}{1 + \sqrt{1 - (1 + \kappa)c^2 r^2}} \qquad \cdots (1)$$

Here, z(r) in Expression (1) is a sag amount of a surface in the optical axis direction with a vertex on the optical axis as an origin. c is a curvature on the optical axis (on-axis curvature). r is a radial coordinate from the optical axis.
In general, a hyperboloid has two focal points. The coordinates of the two focal points are expressed by the following Expression (2) with the surface vertex as a reference.
[Expression 2]

$$f = \frac{1}{c(1 \pm \sqrt{-\kappa})} \qquad \cdots (2)$$

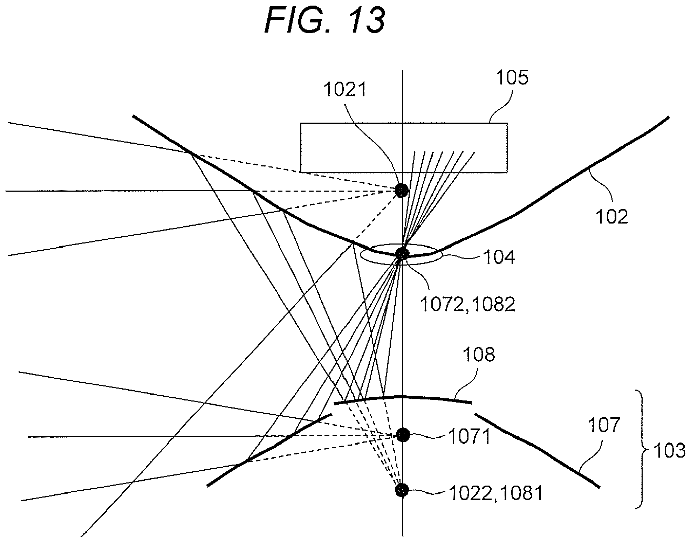

Note that the case where $\pm$ in Expression (2) is + represents the coordinates of the focal point present inside the hyperboloid. The case where $\pm$ in Expression (2) is - represents the coordinates of the focal point present outside the hyperboloid. Hereinafter, the focal point present inside the hyperboloid is referred to as a first focal point, and the focal point present outside the hyperboloid is referred to as a second focal point.
The hyperboloid mirror has a property of condensing reflected light on the second focal point when the light beam toward the first focal point is reflected by the hyperboloid. Conversely, the hyperboloid mirror has a property of reflecting light emitted from the second focal point as if the light was emitted from the first focal point.
Next, FIG. 13 is a cross-sectional view illustrating the relationship among the upper hyperboloid mirror 102, the outer peripheral hyperboloid mirror 107, and the inner peripheral hyperboloid mirror 108.
The relationship among the upper hyperboloid mirror 102, the outer peripheral hyperboloid mirror 107, and the inner peripheral hyperboloid mirror 108 is made such that a second focal point 1022 of the upper hyperboloid mirror 102 substantially coincides with a first focal point 1081 of the inner peripheral hyperboloid mirror 108. This coincidence point does not need to substantially coincide with a first focal point 1071 of the outer peripheral hyperboloid mirror 107, but is made to be located in the vicinity.
Furthermore, a second focal point 1072 of the outer peripheral hyperboloid mirror 107 is made to substantially coincide with a second focal point 1082 of the inner peripheral hyperboloid mirror 108. The imaging optical system 104 is arranged at this coincidence point. This coincidence point does not need to substantially coincide with a first focal point 1021 of the upper hyperboloid mirror 102, but is made to be located in the vicinity.
Due to this, in the distance measurement camera 10 illustrated in FIG. 12, of light 110 from the subject 109, light 112 toward the first focal point (upper viewpoint) 1021 of the upper hyperboloid mirror 102 is reflected by the upper hyperboloid mirror 102 and condensed on the second focal point 1022 of the upper hyperboloid mirror 102.
The second focal point 1022 of the upper hyperboloid mirror 102 substantially coincides with the first focal point 1081 of the inner peripheral hyperboloid mirror 108. Hence, since the light condensed on the second focal point 1022 of the upper hyperboloid mirror 102 can be regarded as the light toward the first focal point 1081 of the inner peripheral hyperboloid mirror 108, this light is reflected again by the inner peripheral hyperboloid mirror 108 and condensed on the second focal point 1082 of the inner peripheral hyperboloid mirror 108.
On the other hand, of the light 110 from the subject 109, light 114 toward the first focal point (lower viewpoint) 1071 of the outer peripheral hyperboloid mirror 107 is reflected by the outer peripheral hyperboloid mirror 107, and condensed and reflected toward the second focal point 1072 of the outer peripheral hyperboloid mirror 107.
The second focal point 1072 of the outer peripheral hyperboloid mirror 107 and the second focal point 1082 of the inner peripheral hyperboloid mirror 108 substantially coincide with each other, and the imaging optical system 104 is arranged at this coincidence point.
Therefore, the reflected light reflected by the upper hyperboloid mirror 102 and further reflected by the inner peripheral hyperboloid mirror 108 and the reflected light reflected by the outer peripheral hyperboloid mirror 107 are simultaneously incident on the image sensor 105 by the imaging optical system 104.
Due to this, the image sensor 105 can generate the output image 117 in which an image 115 of the subject 109 viewed from the upper viewpoint (first focal point) 1021 appears on the inner peripheral side, and an image 116 of the subject 109 viewed from the lower viewpoint (first focal point) 1071 appears on the outer peripheral side at the same time.

The thus obtained output image 117 is supplied to the image processing unit 119 via the drive control unit 118 as illustrated in FIG. 12. The image processing unit 119 separates the output image 117 into an inner peripheral region in which the image 115 appears and an outer peripheral region in which the image 116 appears, performs projective transformation processing on each region, performs stereo matching processing on two images obtained as a result, and generates the three-dimensional position information 120 of the subject 109.

The generated three-dimensional position information 120 is supplied to the integration unit 20 (FIG. 1).

Note that some components of the stereo camera 101 described above, for example, the drive control unit 118 and the image processing unit 119, may be executed by the travel control ECU 50 (FIG. 9) of the automobile 40, for example, independently of the stereo camera 101.

<Relationship between Upper Hyperboloid Mirror 102, Outer Peripheral Hyperboloid Mirror 107, and Inner Peripheral Hyperboloid Mirror 108 and Others>

In the stereo camera 101, the absolute value of the cone constant $\kappa$ of the inner peripheral hyperboloid mirror 108 is set to a value larger than the absolute value of the cone constant $\kappa$ of the outer peripheral hyperboloid mirror 107. Due to this, in the output image 117, the image 115 of the subject 109 viewed from the upper viewpoint 1021 and the image 116 of the subject 109 viewed from the lower viewpoint 1071 are made the same in size.

By making the image 115 on the inner peripheral side and the image 116 on the outer peripheral side in the output image 117 the same in size, the image 115 and the image 116 can be made the same in resolution, and the accuracy of the stereo matching processing can be enhanced.

In the stereo camera 101, as the upper hyperboloid mirror 102, a hyperboloid mirror having a larger caliber than that of the lower hyperboloid mirror 103 is adopted. By making the caliber of the upper hyperboloid mirror 102 larger than that of the lower hyperboloid mirror 103, the light beam having an upward angle of view of the lower viewpoint 1071 can be received by the upper viewpoint 1021, and the up-down angle of view ranges in which the stereo vision can be performed can be secured to be wide to the maximum.

Note that if the upper hyperboloid mirror 102 and the lower hyperboloid mirror 103 have substantially the same caliber, since the lower hyperboloid mirror 103 is separated into the outer peripheral hyperboloid mirror 107 and the inner peripheral hyperboloid mirror 108, the visual field range of the lower viewpoint 1071 is inevitably narrowed.

Meanwhile, in the stereo camera 101, the upper hyperboloid mirror 102 having a large caliber and including the imaging optical system 104 is arranged on the upper side, and the lower hyperboloid mirror 103 having a small caliber is arranged on the lower side. Even if this up-down positional relationship is reversed, there is no problem in practical use.

However, when the stereo cameras 101 are arranged at the four corners of the automobile 40, there is a problem that the angle of view range in which the stereo vision can be performed is not so wide. In particular, in order to use the stereo camera 101 for peripheral sensing for fully automatic driving, it is essential to photograph the vicinity of the automobile, and it is necessary to secure a downward angle of view range.

In the stereo camera 101, a light beam having a downward angle of view that is incident on the upper viewpoint 1021 can cover a range wider than the angle of view range that is incident on the lower viewpoint 1071. Due to this, although it becomes monocular vision by the upper viewpoint 1021, it is possible to photograph the vicinity of the automobile. An image of the vicinity of an automobile is mainly required to detect a white line such as a center line drawn on a road surface, but since it is known that the white line is drawn on the road surface, it is possible to measure a distance even in monocular vision. Therefore, it becomes effective to arrange, on the upper side, the larger upper hyperboloid mirror 102 on which the imaging optical system 104 is arranged.

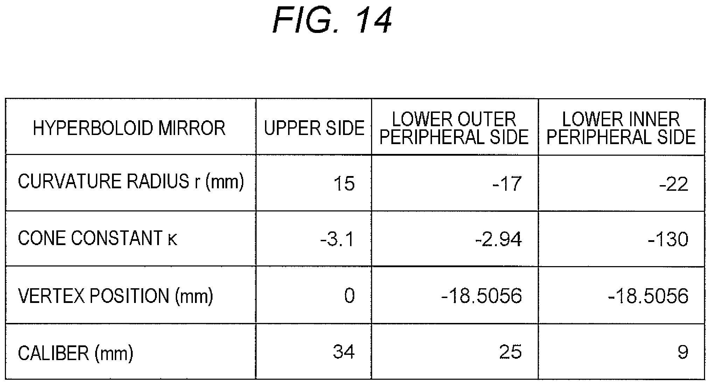

Next, FIG. 14 illustrates an example of a curvature radius r, the cone constant $\kappa$, the vertex position, and the caliber regarding the upper hyperboloid mirror 102, the outer peripheral hyperboloid mirror 107, and the inner peripheral hyperboloid mirror 108.

In the example of the figure, the upper hyperboloid mirror 102 has the curvature radius r of 15 mm, the cone constant $\kappa$ of -3.1, the vertex position of 0 mm, and the caliber of 34 mm, the outer peripheral hyperboloid mirror 107 has the curvature radius r of -17 mm, the cone constant $\kappa$ of -2.94, the vertex position of -18.5056 mm, and the caliber of 25 mm, and the inner peripheral hyperboloid mirror 108 has the curvature radius r of -22 mm, the cone constant $\kappa$ of -130, the vertex position of -18.5086 mm, and the caliber of 9 mm.

However, FIG. 14 is merely an example, and any upper hyperboloid mirror 102, any outer peripheral hyperboloid mirror 107, and any inner peripheral hyperboloid mirror 108 can be adopted as the stereo camera 101.

(3) Third Embodiment

<Configuration Example of Stereo Camera System>

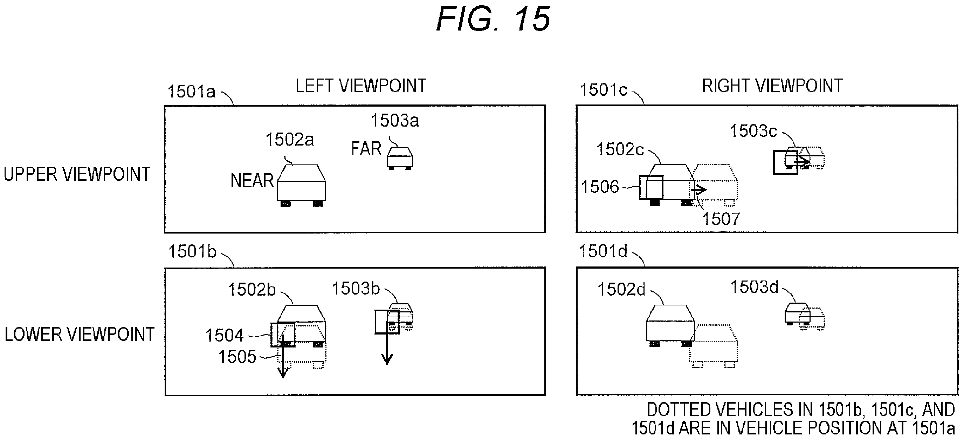

FIG. 15 is a view for describing the concept of image processing of the stereo camera system according to the third embodiment. Here, as an example, it is assumed that 10d and 10a in FIG. 9 are the stereo cameras 101, and stereo cameras having a baseline length in a direction perpendicular to the road surface are arranged on the left side and the right side in a front part of the vehicle.

For this reason, it is possible to acquire four images of 1501a from the left viewpoint and the upper viewpoint, 1501b from the left viewpoint and the lower viewpoint, 1501c from the right viewpoint and the upper viewpoint, and 1501d from the right viewpoint and the lower viewpoint. Note that FIG. 15 is illustrated as a view after projective transformation. It is assumed that a nearby vehicle 1502 and a far vehicle 1503 appear in the acquired image.

As the distance measurement of the stereo camera 101 alone, stereo matching processing is performed in the vertical direction on a region 1504 in a predetermined range of 1501b in order to obtain the parallax in the direction perpendicular to the road surface. Specifically, the processing of comparing the region 1504 in the predetermined range of 1501b with the region 1501a to calculate the correlation is performed while shifting the position of the target 1501a in a scanning direction 1505, and the position having the highest correlation is determined to have been subjected to block matching to obtain the parallax. By performing similar processing on the entire 1501b, a parallax image is obtained, and a distance image is obtained from the relationship between the baseline length and the focal point distance of the objective lens.

As the distance measurement of the long-baseline-length stereo camera, stereo matching processing is performed in the horizontal direction on a region 1506 in a predetermined range of 1501c in order to obtain the parallax in a direction horizontal to the road surface. At this time, since there is a distance measurement result of the stereo camera 101 alone, although the distance measurement accuracy at a far distance is inferior to that of the long-baseline-length stereo camera, it is possible to estimate an approximate block matching position of the long-baseline-length stereo camera.

Therefore, it becomes possible to perform stereo matching by performing scanning on 1507 in the horizontal direction in the front and rear of the estimated block matching position. In the case where there is no distance measurement result of the stereo camera 101, it is necessary to perform scanning in an assumed maximum scanning range. In comparison with this, in the case where there is a distance measurement result of the stereo camera 101, it is possible to shorten the scanning range.

Therefore, it is possible to reduce the calculation load for obtaining the parallax image, or it is possible to shorten the processing time. In the long-baseline-length stereo camera, the parallax becomes large and the scanning range becomes long, and therefore the effect of limiting the scanning range is large. When the parallax image is obtained, the distance image is obtained from the relationship between the baseline length of the long-baseline-length stereo camera and the focal point distance of the objective lens.

The above description assumes that the baseline length in the direction where the distance measurement cameras 10d and 10a are perpendicular to the road surface. However, even in the baseline length in the direction where the distance measurement cameras 10d and 10a are horizontal to the road surface, the scanning direction of the stereo matching only changes to horizontal, and it is possible to reduce the calculation load or shorten the processing time similarly for the long-baseline-length stereo camera.

Although the description has been given assuming that the distance measurement results of the distance measurement cameras 10d and 10a are used for the long-baseline-length stereo camera, conversely, the distance measurement result of the long-baseline-length stereo camera can also be used for the distance measurement camera.

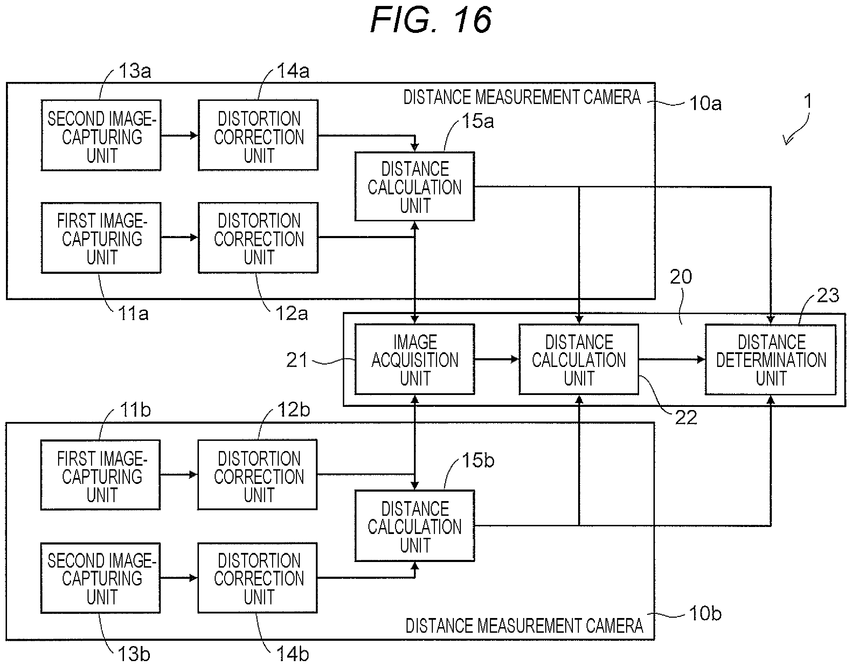

FIG. 16 is a block diagram illustrating a detailed configuration example of the stereo camera system 1, and components similar to those in FIG. 2 in the first embodiment are given the same reference numerals. Here, for convenience, the distance measurement camera 10b will be described instead of the distance measurement camera 10d, but the processing content is not changed.

The distance calculation processing of the distance measurement camera 10a and the distance measurement camera 10b is similar to that in FIG. 2, but is different in that the distance calculation unit 22 of the long-baseline-length stereo camera in the integration unit 20 uses the result of the distance calculation unit of the distance measurement camera 10a or the distance measurement camera 10b.

The distance calculation unit 22 performs stereo matching processing. As described above, the scanning range for stereo matching can be shortened by using the result of distance calculation of the distance measurement camera 10a or the distance measurement camera 10b.

In FIG. 16, the results of the distance calculation units of both the distance measurement camera 10a and the distance measurement camera 10b are input to the distance calculation unit 22, but only any one of the results may be used, or the determination may be made using the results of both.

<Operation of Camera System>

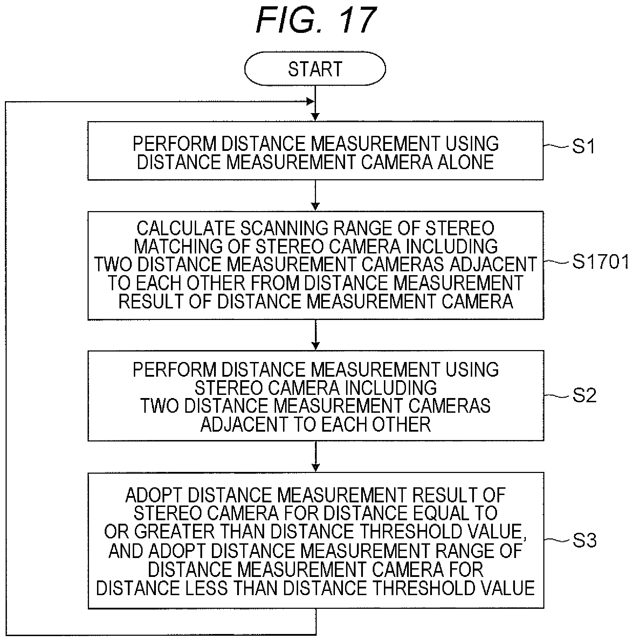

FIG. 17 is a flowchart explaining an example of the operation by the stereo camera system 1. The flow has step S1701 added between step S1 and step S2 of the flowchart of FIG. 8 in the first embodiment. In step S1701, a scanning range of stereo matching of the long-baseline-length stereo camera including two adjacent distance measurement cameras is calculated from the distance measurement result calculated in step S1.

Therefore, in step S2, the scanning range of stereo matching can be shortened as compared with that in the first embodiment, and the calculation load can be reduced or the processing time can be shortened.

(4) Fourth Embodiment

<Configuration Example of Stereo Camera System>

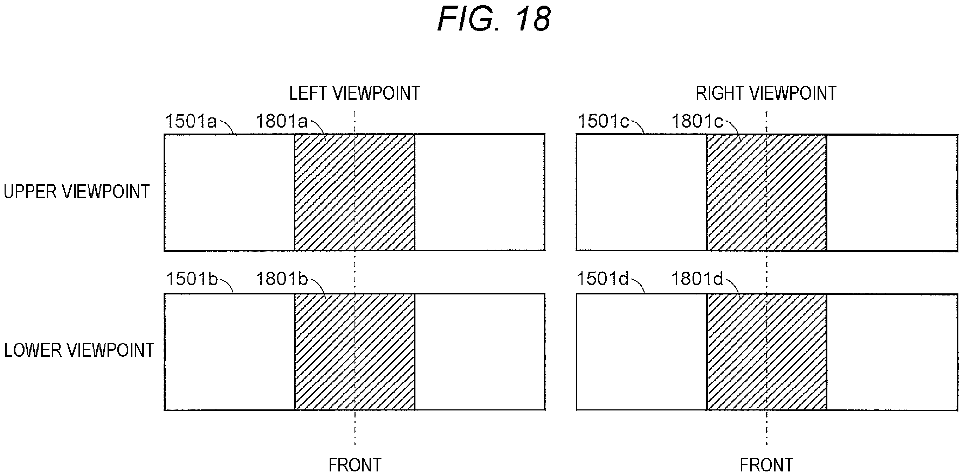

FIG. 18 is a view for describing the concept of image processing of the stereo camera system according to the fourth embodiment. Here, as an example, it is assumed that 10d and 10a in FIG. 9 are the stereo cameras 101, and stereo cameras having a baseline length in a direction perpendicular to the road surface are arranged on the left side and the right side in a front part of the vehicle.

For this reason, it is possible to acquire four images of 1501a from the left viewpoint and the upper viewpoint, 1501b from the left viewpoint and the lower viewpoint, 1501c from the right viewpoint and the upper viewpoint, and 1501d from the right viewpoint and the lower viewpoint.

Note that FIG. 15 is illustrated as a view after projective transformation. It is assumed that a nearby vehicle 1502 and a far vehicle 1503 appear in the acquired image. The alternate long and short dash line in the figure indicates a front position in an image of each viewpoint.

In the case where the vehicle is traveling at low speed at a place where there is an intersection such as an urban area or a place where a pedestrian or a bicycle is assumed to run out from the left and right, it is necessary to perform object detection or object recognition on the left and right. Therefore, stereo matching processing is performed in the entire range of the acquired image. In the case where the vehicle is traveling at high speed on a limited-access road such as an expressway, object detection and object recognition in front of the vehicle become important. Therefore, the range in which stereo matching is performed with the front as the center can be reduced in the horizontal direction. For example, it is only required to perform stereo matching processing on the acquired images 1501a, 1501b, 1501c, and 1501d of the respective viewpoints by using processing ranges 1801a, 1801b, 1801c, and 1801d.

This can reduce the calculation load or shorten the processing time at the time of high-speed traveling. In the case where the horizontal angle of view is large, the range in which the stereo matching processing is to be performed is wide, and hence the effect of limiting the processing range is large.

Note that, although the example of reducing in the horizontal direction with the front as the center has been described here, the front may not necessarily be the center, and the range may be reduced not only in the horizontal direction but also in the up-down direction.

Although illustrated as an example of the front of the vehicle, similar processing can be performed on the side or the rear of the vehicle.

Although the image after the projective transformation has been described as an example, a part corresponding to the range after the reduction of the image sensor may be calculated before the projective transformation, and the range of the target may be reduced before the projective transformation.

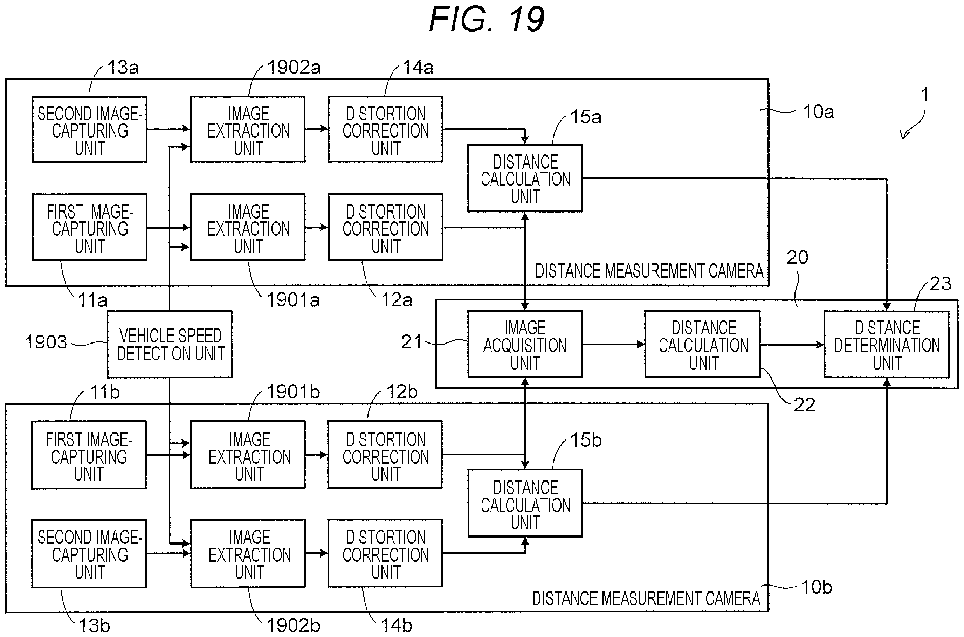

FIG. 19 is a block diagram illustrating a detailed configuration example of the stereo camera system 1, and components similar to those in FIG. 2 in the first embodiment are given the same reference numerals. Here, for convenience, the distance measurement camera 10b will be described instead of the distance measurement camera 10d, but the processing content is not changed.

As compared with FIG. 2 of the first embodiment, image extraction units 1901a, 1901b, 1902a, and 1902b, and a vehicle speed detection unit 1903 are added. The first image-capturing unit 11a outputs the acquired first image to the image extraction unit 1901a. The image extraction unit 1901a receives information on the speed of the vehicle from the vehicle speed detection unit 1903, and determines an image extraction range according to the speed of the vehicle. The image extraction unit 1901a outputs the extracted first image to the distortion correction unit 12a. For the image extraction units 1901b, 1902a, and 1902b, the processing is similar to that of 1901a, and the other processing are similar to those of the first embodiment, and thus description thereof is omitted.

Note that in FIG. 19, the image extraction unit is added between the image-capturing unit and the distortion correction unit, but the image extraction unit may be provided between the distortion correction unit and the distance calculation unit, or the image extraction unit may be provided at a subsequent stage. These processing may be processing performed in the travel control ECU.

<Operation of Camera System>

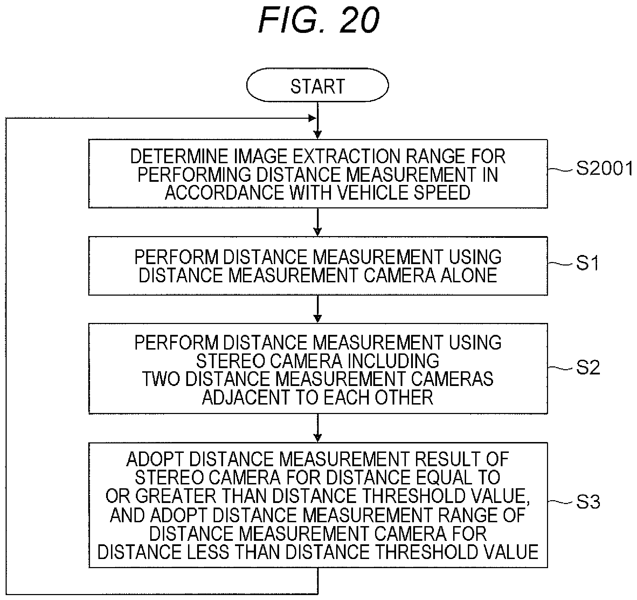

FIG. 20 is a flowchart explaining an example of the operation by the stereo camera system 1. The flow has step S2001 added before step S1 of the flowchart of FIG. 8 in the first embodiment. In step S2001, the image extraction range is changed according to the vehicle speed.

Therefore, in step S1 and step S2, the range in which the stereo matching processing is performed can be reduced during high-speed traveling as compared with the first embodiment, and the calculation load can be reduced or the processing time can be shortened.

(5) Fifth Embodiment

<Configuration Example of Stereo Camera System>

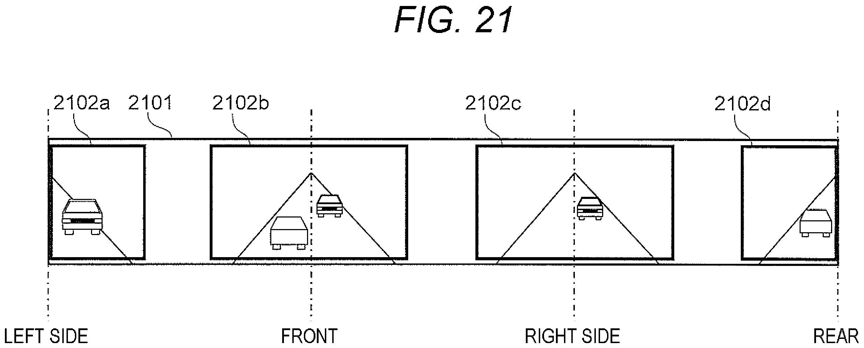

FIG. 21 is a view for describing the concept of image processing of the stereo camera system according to the fifth embodiment. Here, as an example, an image acquired by the distance measurement camera 10a on the right front side in FIG. 9 is illustrated as 2101. Note that FIG. 21 is illustrated as a view after projective transformation. It is assumed that the acquired image has a horizontal angle of view of approximately 270 degrees, and alternate long and short dash lines in the figure indicate left, front, right, and rear positions in order from the left.

For example, since it is necessary to detect or recognize the left and right vehicles at an intersection of a cross, images are extracted in ranges of a left side 2102a, a front 2102b, a right side 2102c, and a rear 2102d so as to include a range of the presence of the road. On the other hand, the image of the left side 2102a and the image of the right side 2102c are not necessarily extracted since it is unnecessary to detect and recognize an object in the left-right direction at all times in a limited-access road such as an expressway.

This can reduce the calculation load or shorten the processing time according to the road situation. In order to grasp the road situation, map information (for example, it is possible to cooperate with an in-vehicle navigation system, acquire map information used there, and judge the road situation) may be used, or the road situation may be acquired by road-to-vehicle communication, inter-vehicle communication, or the like.

Note that, although examples of an intersection of a cross and an expressway have been presented here, any image extraction range can be set according to the situation of the road. It is also possible to perform stereo matching processing only for the distance measurement camera at normal times, and to perform stereo matching processing in a predetermined range for the processing of the long-baseline-length stereo camera in the case where far distance measurement in the predetermined range from the distance measurement camera is required.

Although the image after the projective transformation has been described as an example, a part corresponding to the range after the reduction of the image sensor may be calculated before the projective transformation, and the range of the target may be reduced before the projective transformation.

<Detailed Configuration Example of Camera System>

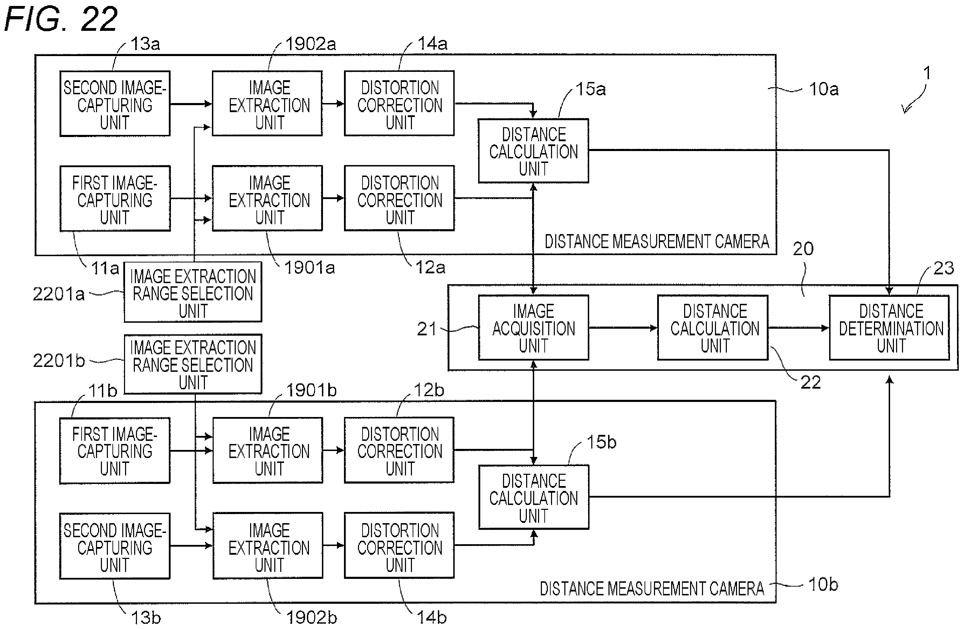

FIG. 22 is a block diagram illustrating a detailed configuration example of the stereo camera system 1, and components similar to those in FIG. 2 in the first embodiment are given the same reference numerals.

As compared with FIG. 19 of the fourth embodiment, the stereo camera system 1 has a configuration in which image extraction range selection units 2201a and 2201b are added instead of the vehicle speed detection unit 1903. The first image-capturing unit 11a outputs the acquired first image to the image extraction unit 1901a. The image extraction unit 1901a receives information on the image extraction range according to the road situation from the image extraction range selection unit 2201a, and determines an image extraction range. The image extraction unit 1901a outputs the extracted first image to the distortion correction unit 12a. The image extraction range selection unit 2201b executes processing similar to that of the image extraction range selection unit 2201a, and the image extraction units 1901b, 1902a, and 1902b execute processing similar to that of the image extraction unit 1901a. The other processing are similar to those of the first embodiment, and thus description thereof is omitted.

Note that in FIG. 22, the image extraction unit is added between the image-capturing unit and the distortion correction unit, but the image extraction unit may be provided between the distortion correction unit and the distance calculation unit, or the image extraction unit may be provided at a subsequent stage. These processing may be processing performed in the travel control ECU.

<Operation of Stereo Camera System>

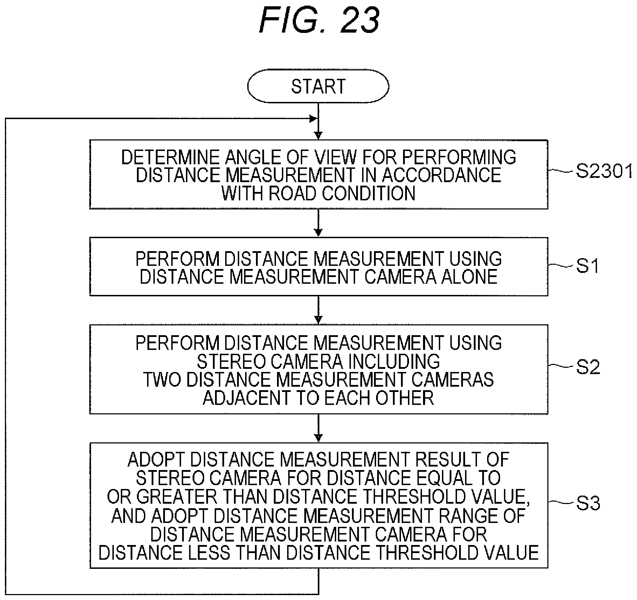

FIG. 23 is a flowchart for explaining an example of the operation by the stereo camera system 1. This operation is processing in which step S2301 is added before step S1 of the flowchart of FIG. 8 in the first embodiment. In step S2301, the image extraction range is changed according to the road situation.

Therefore, in step S1 and step S2, the range in which the stereo matching processing is performed can be reduced as compared with the first embodiment, and the calculation load can be reduced or the processing time can be shortened.

(6) Sixth Embodiment

<Configuration Example of In-Vehicle Stereo Camera System>

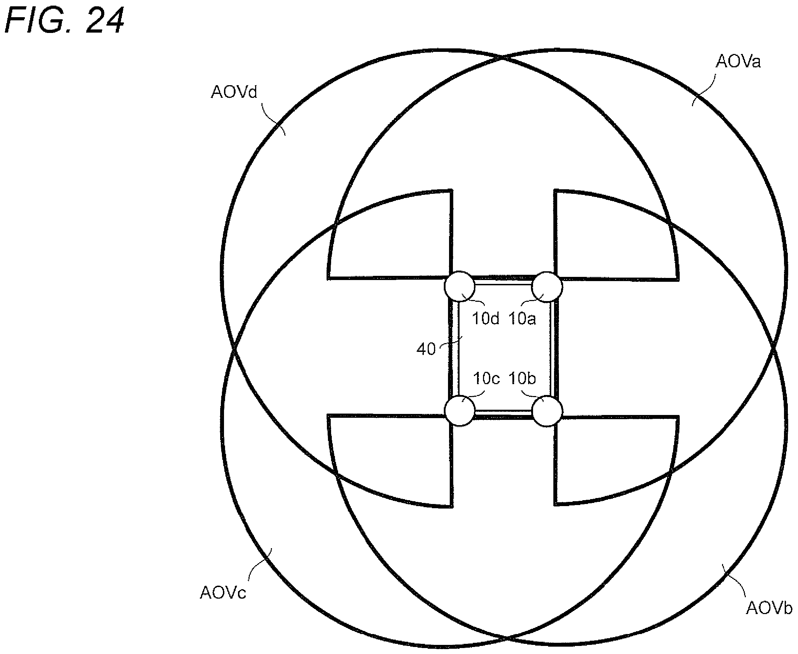

FIG. 24 is a view illustrating an angle of view range of the in-vehicle stereo camera system 2 that is the sixth embodiment in the horizontal direction with respect to the road surface. Since the configuration of the in-vehicle stereo camera system 2 of the present embodiment is similar to that of the second embodiment, the description thereof will be omitted. The difference between the present embodiment and the second embodiment lies in the horizontal angle of view of the distance measurement camera 10. The distance measurement cameras 10a, 10b, 10c, and 10d are arranged at the four corners of the vehicle, respectively. In order to eliminate the blind spot, assuming that the vehicle is rectangular when viewed from above, each distance measurement camera has a horizontal angle of view of approximately 270 degrees.

Note that, since the shape of the vehicle viewed from above is not necessarily rectangular, the horizontal angle of view may be optimized so as to eliminate a blind spot according to the shape (for example, the integration units 20ab, 20bc, 20ad, and 20cd can perform optimization).

The distance measurement cameras 10a and 10b, 10b and 10c, 10c and 10d, and 10d and 10a can each constitute the long-baseline-length stereo camera, and the horizontal angle of view of the long-baseline-length stereo camera becomes 180 degrees.

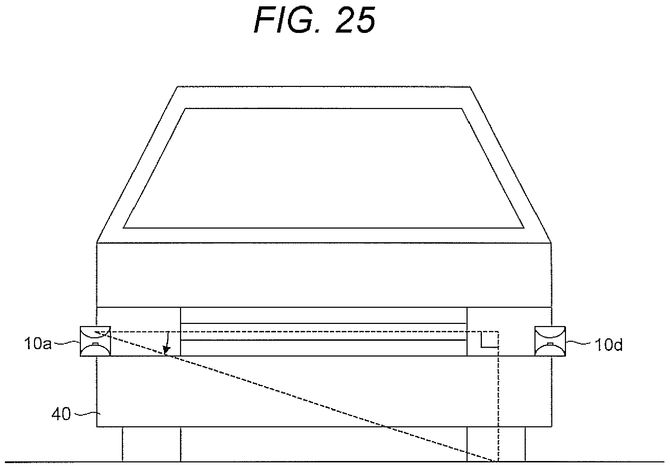

FIG. 25 is a view illustrating the angle of view range of the in-vehicle stereo camera system 2 in a direction perpendicular to the road surface. Here, as an example, a case where the distance measurement camera is the stereo camera 101 is illustrated. In order to grasp the road surface situation in the vicinity of the left and right wheels, the lower vertical angle of view that allows the left and right stereo cameras to mutually view immediately below the wheels is only required.

Note that the lower vertical angle of view does not necessarily need to be designed as described above from viewpoints of both eyes, and if stereo vision is not required, the lower vertical angle of view may be designed as described above only from viewpoint of one side.

Since the blind spot is eliminated by providing the distance measurement camera with the angle of view as described above, it is possible to detect and recognize, for example, a white line, a vehicle stop, a road shape in the vicinity of the vehicle, and the like.

(7) Seventh Embodiment

<Configuration Example of In-Vehicle Stereo Camera System>

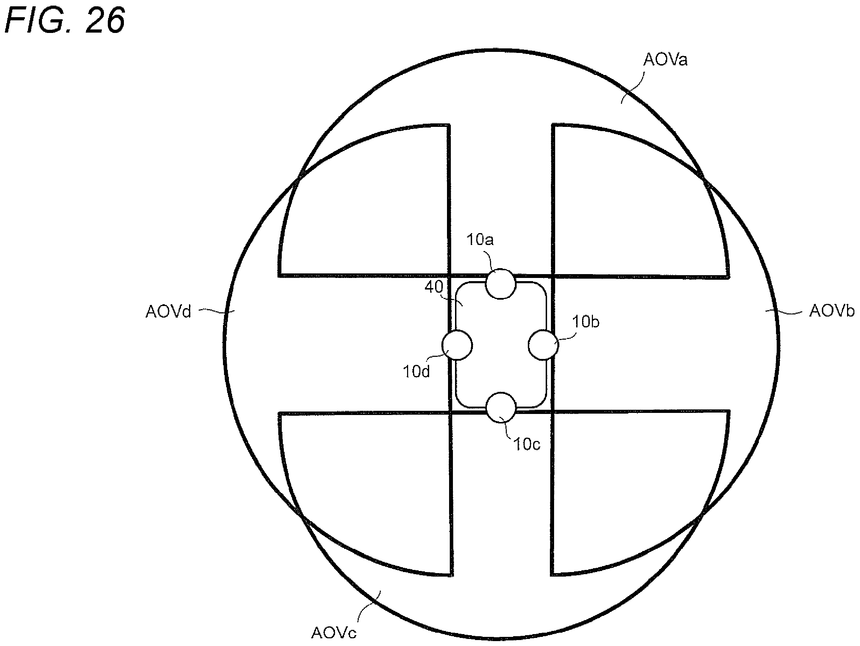

FIG. 26 is a view illustrating an angle of view range of the in-vehicle stereo camera system 2 that is the seventh embodiment in the horizontal direction with respect to the road surface. Since the configuration of the in-vehicle stereo camera system 2 of the present embodiment is similar to that of the second embodiment, the description thereof will be omitted. The difference between the present embodiment and the second embodiment lies in the horizontal angle of view of the distance measurement camera 10. The distance measurement cameras 10a, 10b, 10c, and 10d are arranged at the four sides of the vehicle, respectively. In order to eliminate the blind spot, assuming that the vehicle is rectangular when viewed from above, each distance measurement camera has a horizontal angle of view of approximately 180 degrees.

Note that, since the shape of the vehicle viewed from above is not necessarily rectangular, the horizontal angle of view may be optimized so as to eliminate a blind spot according to the shape (for example, the integration units 20ab, 20bc, 20ad, and 20cd can perform optimization).

The distance measurement cameras 10a and 10b, 10b and 10c, 10c and 10d, and 10d and 10a can each constitute the long-baseline-length stereo camera, and the horizontal angle of view of the long-baseline-length stereo camera becomes 90 degrees.

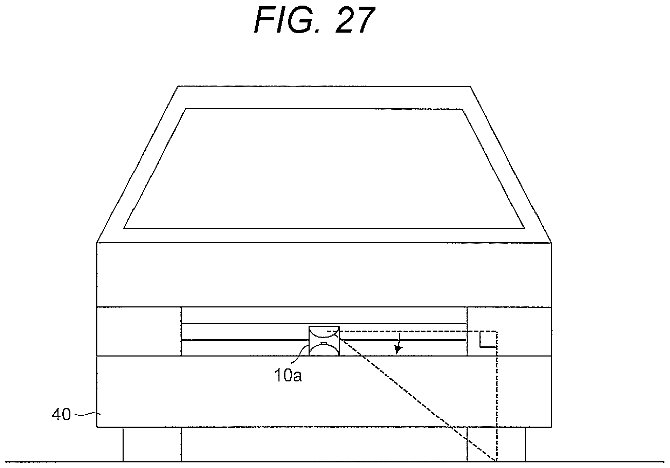

FIG. 27 illustrates the angle of view range of the in-vehicle stereo camera system 2 in a direction perpendicular to the road surface. Here, as an example, a case where the distance measurement camera is the stereo camera 101 is illustrated. In order to grasp the road surface situation in the vicinity of the left and right wheels, the lower vertical angle of view that allows the stereo cameras to view immediately below the wheels is only required.

Note that the lower vertical angle of view does not necessarily need to be designed as described above from viewpoints of both eyes, and if stereo vision is not required, the lower vertical angle of view may be designed as described above only from viewpoint of one side.

Since the blind spot is eliminated by providing the distance measurement camera with the angle of view as described above, it is possible to detect and recognize, for example, a white line, a vehicle stop, a road shape in the vicinity of the vehicle, and the like.

In the sixth embodiment, an example in which the distance measurement cameras are arranged at the corners of the vehicle has been described, and in the seventh embodiment, an example in which the distance measurement cameras are arranged at the sides of the vehicle has been described. However, the arrangement of the four distance measurement cameras can be arbitrarily changed, and the horizontal angle of view may be set to match each arrangement position.

(8) Eighth Embodiment

<Configuration Example of In-Vehicle Stereo Camera System>

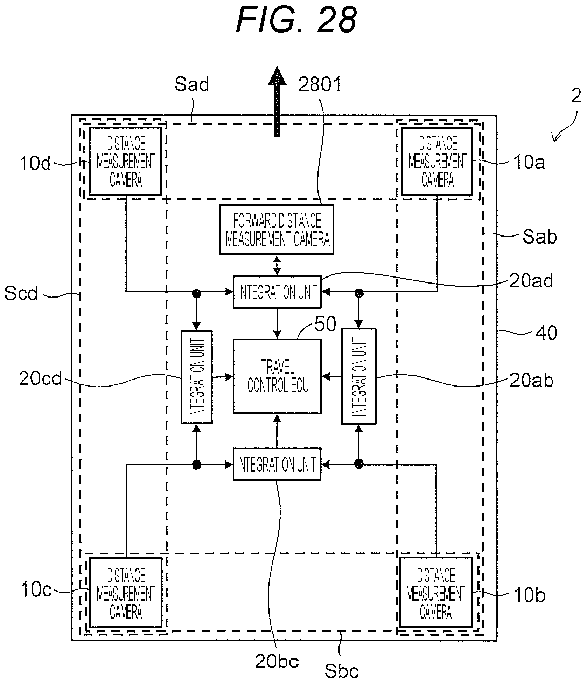

FIG. 28 is a view illustrating a configuration example of an in-vehicle stereo camera system 2 that is the eighth embodiment. Note that, among the components of the in-vehicle stereo camera system 2, those common to the components of the stereo camera system 1 (FIG. 2) are given the same reference signs, and the description thereof will be omitted as appropriate.

The in-vehicle stereo camera system 2 of the present embodiment has a configuration in which a forward distance measurement camera 2801 is added to the in-vehicle stereo camera system according to the second embodiment. The distance measurement camera 2801 can be implemented by, for example, a TOF camera, a monocular camera using an image analysis method called optical flow, and the like, in addition to the stereo camera.

Images and distance images acquired by the forward distance measurement camera 2801 are output to the integration unit 20ad. Distance measurement results of the integration unit 20ad are output to the forward distance measurement camera 2801.

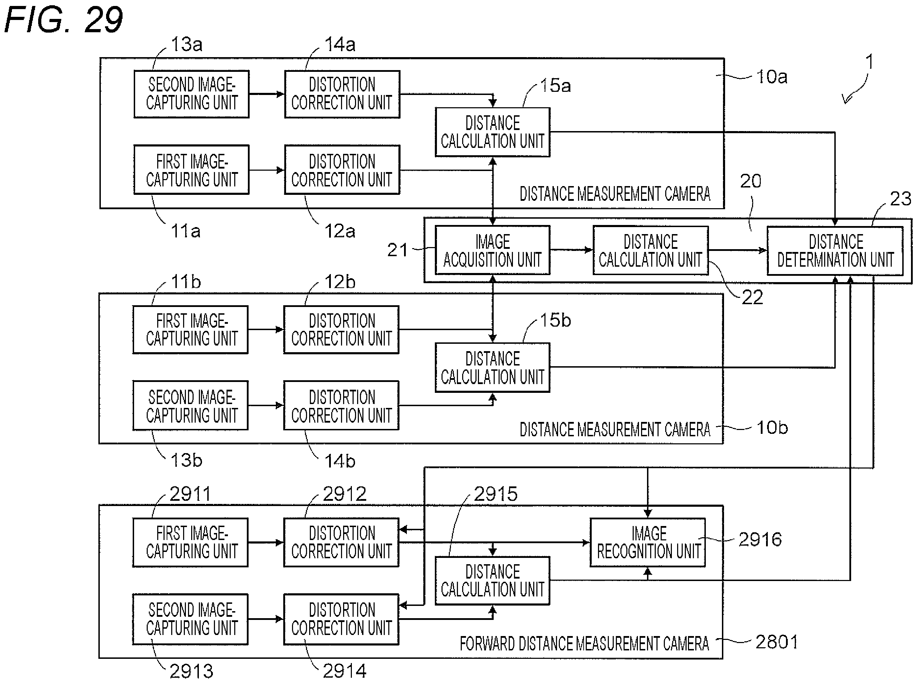

FIG. 29 is a block diagram illustrating a detailed internal configuration example of the in-vehicle stereo camera system 2, and the same components as those in FIG. 2 in the first embodiment are indicated by the same numerals. An example in which a stereo camera is adopted as an example of the forward distance measurement camera 2801 will be described. The distance calculation of the distance measurement camera 10a and the distance measurement camera 10b is similar to that in FIG. 2.

Note that, in the configuration example of FIG. 29, the distance measurement camera 2801 is a stereo camera having a first image-capturing unit 2911 and a second image-capturing unit 2913.

The distance measurement camera 2801 has the first image-capturing unit 2911, a distortion correction unit 2912, the second image-capturing unit 2913, a distortion correction unit 2914, a distance calculation unit 2915, and an image recognition unit 2916.

Since the distance calculation processing in the forward distance measurement camera 2801 is similar to that of the distance measurement camera 10 in the first embodiment, the description thereof will be omitted. Note that, in the forward distance measurement camera 2801, the distortion correction unit 2912 outputs a first image in which image distortion is corrected to the image recognition unit 2916. The image recognition unit 2916 recognizes a vehicle, a pedestrian, and the like by using the first image in which the image distortion is corrected and information on the distance calculated by the distance calculation unit 2915. At this time, it is also possible to specify the range in which image recognition is performed using information on the distance calculation unit 2915 or the distance determination unit 23 of the long-baseline-length stereo camera.

Since the forward distance measurement camera 2801 has a horizontal angle of view limited to the front, it can have angular resolution higher than that of the distance measurement camera 10. That is, the same target object can be acquired with a larger number of pixels than that of the distance measurement camera 10. Therefore, the distance calculation is performed by the distance determination unit 23 of the long-baseline-length stereo camera, and the image recognition is performed by the image recognition unit 2916 of the forward distance measurement camera, whereby the object recognition and the highly accurate distance measurement become possible on a far object that is low in distance accuracy with the forward stereo camera alone.

<Operation of In-Vehicle Stereo Camera System>

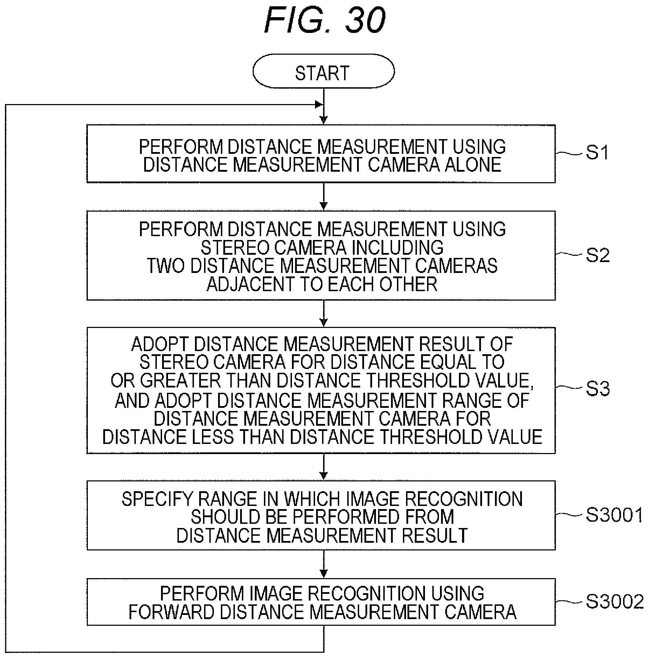

FIG. 30 is a flowchart for explaining an example of the operation by the in-vehicle stereo camera system 2. This operation is processing in which step S3001 and step S3002 are added after step S3 of the flowchart of FIG. 8 in the first embodiment. In step S3001, the range in which image recognition is to be performed by the forward distance measurement camera is specified from the distance measurement result calculated in step S3. In step S3002, a forward distance measurement camera 2701 having angular resolution higher than that of the distance measurement camera 10 performs image recognition. Therefore, it is possible to enhance the accuracy of image recognition as compared with a case where image recognition is performed by the distance measurement camera 10.

Note that when vehicle control such as steering and braking is required as a result of the image recognition, the vehicle control is performed via the travel control ECU 50.

(9) Ninth Embodiment

<Operation Example of In-Vehicle Stereo Camera System>

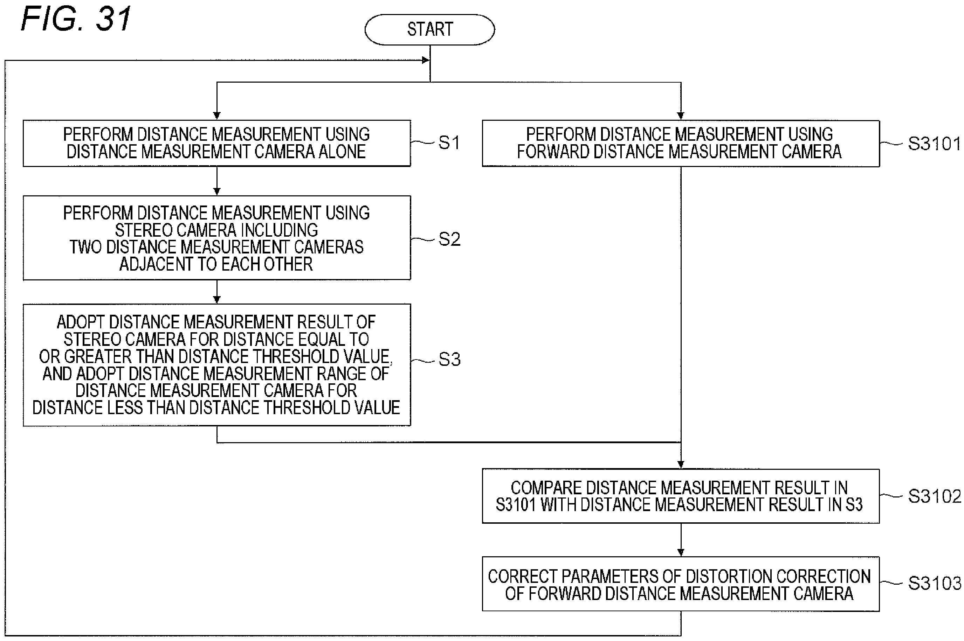

FIG. 31 is a flowchart for explaining an example of the operation by the in-vehicle stereo camera system 2 that is the ninth embodiment. Since the system configuration and the block diagram are similar to those of the eighth embodiment, the description thereof will be omitted.

In the in-vehicle stereo camera system 2, distance measurement processing is executed by the forward distance measurement camera in step S3101 in parallel with steps S1 to S3 of the flowchart of FIG. 8 in the first embodiment.

In step S3102, the distance measurement result of the forward distance measurement camera in step S3101 is compared with the distance measurement result in step 3. At this time, regarding a far distance measurement result, the long-baseline-length stereo camera has high accuracy because it has a longer baseline length than that of the forward distance measurement camera.

Therefore, in the case where the distance measurement result of the forward distance measurement camera is different from the distance measurement result of step 3, the distortion correction parameter of the forward distance measurement camera is corrected so as to be close to the distance measurement result of step 3, whereby calibration of the forward distance measurement camera becomes possible. Specifically, the vanishing point error of the forward distance measurement camera is only required to be corrected with reference to the distance measurement result of the long-baseline-length stereo camera.

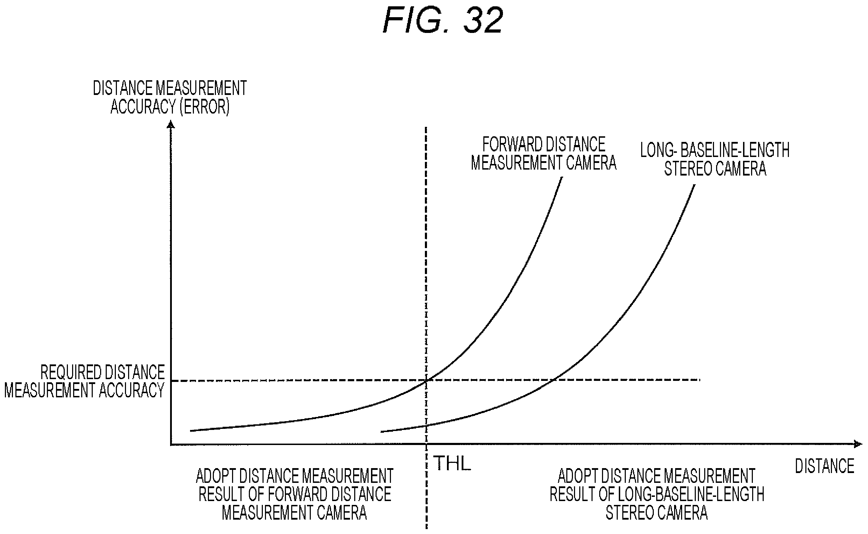

FIG. 32 indicates the distance measurement accuracy with respect to the distance to the object by the long-baseline-length stereo camera and the forward distance measurement camera 10. Note that the horizontal axis in each figure indicates the actual distance to the object that becomes the target whose distance is measured, and the vertical axis indicates the distance measurement accuracy. In the case where the distance accuracy of the long-baseline-length stereo camera is higher (error is smaller) than that of the forward distance measurement camera, the distance measurement result of the forward distance measurement camera is only required to be adopted up to the distance THL, which satisfies the distance measurement accuracy required for the forward distance measurement camera, and the distance measurement result of the long-baseline-length stereo camera is only required to be adopted at a distance farther than the distance THL.

At this time, it is also possible to perform the distance measurement by operating only the forward distance measurement camera at normal times, for example, and operating the long baseline stereo camera only when it is determined that the distance measurement is necessary at a far distance that does not satisfy the required distance measurement accuracy.

Note that the forward distance measurement camera 2801, the distance measurement cameras 10a, 10b, 10c, and 10d, and the long-baseline-length stereo cameras Sab, Sbc, Scd, and Sad do not need to be operated at all times, and are only required to perform processing according to the road situation and travel situation.

(10) Summary

The functions of the embodiments according to the present disclosure can also be implemented by a program code of software. In this case, a storage medium in which the program code is recorded is provided to a system or a device, and a computer (or CPU or MPU) of the system or the device reads the program code stored in the storage medium. In this case, the program code itself having been read from the storage medium implements the function of the embodiments described above, and the program code itself and the storage medium storing the program code constitute the present disclosure. As a storage medium for supplying such a program code, for example, a flexible disk, a CD-ROM, a DVD-ROM, a hard disk, an optical disk, a magneto-optical disk, a CD-R, a magnetic tape, a nonvolatile memory card, a ROM, or the like is used.

Based on an instruction of the program code, an operating system (OS) operating on the computer may perform some or all of the actual processing, and the function of the embodiments described above may be implemented by the processing. Furthermore, after the program code having been read from the storage medium is written into the memory on the computer, the CPU of the computer or the like may perform some or all of the actual processing based on the instruction of the program code, and the function of the embodiments described above may be implemented by the processing.

Furthermore, by being distributed via a network, the program code of software that implements the function of the embodiments may be stored in a storage means such as a hard disk and a memory of the system or the device or a storage medium such as a CD-RW and a CD-R, and at the time of use, the computer (or CPU or MPU) of the system or the device may read and execute the program code stored in the storage means or the storage medium.

As described above, various embodiments have been described in the description of the present application, but the technique of the present disclosure is not limited to the above-described embodiments, and further includes various modifications. For example, an example of the above-described embodiments has been described in detail in order to facilitate understanding of the technique of the present disclosure, and the present disclosure is not limited to one including all the configurations described here. A part of the configuration of an example of a certain embodiment can be replaced with the configuration of another example. The configuration of another example can be added to the configuration of an example of a certain embodiment. Another configuration can also be added to, deleted from, or replaced with a part of the configuration of an example of each embodiment. Some or all of the above configurations, functions, processing units, processing means, and the like may be implemented with hardware by, for example, designing them with an integrated circuit. The control lines and information lines in the drawings indicate what are considered to be necessary for description, and do not necessarily indicate all of them. Almost all configurations may be considered to be interconnected.

Reference Signs List

| | |
|---|---|
| 1 | stereo camera system |
| 2 | in-vehicle stereo camera system |
| 10 | distance measurement camera |
| 11 | first image-capturing unit |
| 12 | distortion correction unit |
| 13 | second image-capturing unit |
| 14 | distortion correction unit |
| 15 | distance calculation unit |
| 20 | integration unit |
| 21 | image acquisition unit |
| 22 | distance calculation unit |
| 23 | distance determination unit |
| 31 | light condensing unit |
| 32 | high-resolution image sensor |
| 33 | light condensing unit |
| 34 | low-resolution image sensor |
| 40 | automobile |
| 50 | travel control ECU |
| 101 | stereo camera |
| 102 | upper hyperboloid mirror |
| 103 | lower hyperboloid mirror |
| 104 | imaging optical system |
| 105 | image sensor |
| 106 | opening |
| 107 | outer peripheral hyperboloid mirror |
| 108 | inner peripheral hyperboloid mirror |
| 109 | subject |
| 115 | image |
| 116 | image |
| 117 | output image |
| 118 | drive control unit |
| 119 | image processing unit |
| 120 | three-dimensional position information |

**Claims**

1. A stereo camera system, comprising:

    a plurality of distance measurement cameras that captures an image of an object present in an own angle of view range and performs distance measurement of the object; and
    an integration unit that sets a pair of the distance measurement cameras as a long-baseline-length stereo camera and measures a distance to the object based on an image captured by each of the pair of the distance measurement cameras, wherein
    an image processing range of the distance measurement camera or the integration unit is changeable.

2. The stereo camera system according to claim 1, wherein

    the distance measurement camera and the integration unit include a distance calculation unit, and
    the integration unit determines a scanning range of stereo matching processing of distance calculation using a result of distance calculation of the distance measurement camera.

3. The stereo camera system according to claim 1, further comprising:

    a vehicle speed detection unit, wherein
    the distance measurement camera includes an image extraction unit, and
    the distance measurement camera changes a target image range for the distance calculation according to a speed of a vehicle.

4. The stereo camera system according to claim 3, wherein
    the distance measurement camera reduces a target image range for distance calculation in a case where a speed of a vehicle is high as compared with a case where a speed of a vehicle is low.

5. The stereo camera system according to claim 1, further comprising:

    an image extraction range selection unit, wherein
    the distance measurement camera includes an image extraction unit, and
    the distance measurement camera is configured to be able to change a target image range for distance calculation according to a road situation.

6. The stereo camera system according to claim 1, wherein

    a stereo camera constituting the distance measurement camera includes
    first and second convex hyperboloid mirrors having a common central axis and arranged up-down with vertices facing each other,
    an imaging optical system arranged in an opening provided at a vertex portion of the first convex hyperboloid mirror, and
    an image sensor that generates an output image in which two corresponding images simultaneously appear in a case where an image of a subject is captured from two different viewpoints, based on light incident through the imaging optical system after light of the subject is reflected by the first convex hyperboloid mirror and then reflected by the second convex hyperboloid mirror, and light incident through the imaging optical system after light of the subject is reflected by the second convex hyperboloid mirror.

7. A stereo camera system, comprising:

    a plurality of distance measurement cameras that captures an image of an object present in an own angle of view range and performs distance measurement of the object; and
    an integration unit that sets a pair of the distance measurement cameras as a long-baseline-length stereo camera and measures a distance to the object based on an image captured by each of the pair of the distance measurement cameras, wherein
    the integration unit is configured to optimize an angle of view of the distance measurement camera according to a mounting place of a vehicle.

8. The stereo camera system according to claim 7, wherein
the distance measurement cameras are arranged at four corners of a vehicle, and each horizontal angle of view is approximately 270°.

9. The stereo camera system according to claim 7, wherein
the distance measurement cameras are arranged at four sides of a vehicle, and each horizontal angle of view is approximately 180°.

10. The stereo camera system according to claim 7, wherein
a lower side of a vertical angle of view of the distance measurement camera allows stereoscopic vision of a portion immediately below a wheel.

11. A stereo camera system, comprising:

a plurality of distance measurement cameras that captures an image of an object present in an own angle of view range and performs distance measurement of the object; and
an integration unit that sets a pair of the distance measurement cameras as a long-baseline-length stereo camera and measures a distance to the object based on an image captured by each of the pair of the distance measurement cameras,
a forward distance measurement camera; and
a vehicle control unit, wherein
an angular resolution of the forward distance measurement camera is higher than an angular resolution of the distance measurement camera.

12. The stereo camera system according to claim 11, wherein

the forward distance measurement camera includes an image recognition unit, and
the forward distance measurement camera uses the image recognition unit to perform image recognition on a far object based on a result of distance measurement performed by the integration unit.

13. The stereo camera system according to claim 11, wherein

the integration unit includes a distance determination unit that determines one of a distance measurement result by the distance measurement camera alone or a distance measurement result by the integration unit, which is adopted,
the forward distance measurement camera includes a distortion correction unit that corrects distortion of a captured image, and
the distortion correction unit is configured to be calibratable using a distance measurement result by the distance determination unit.

14. The stereo camera system according to claim 11, wherein
the vehicle control unit performs vehicle control using a distance measurement result by the forward distance measurement camera in a distance range where distance measurement accuracy necessary for the forward distance measurement camera can be ensured, and performs vehicle control using a distance measurement result by the integration unit otherwise.

15. A distance measurement method in a stereo camera system, wherein

the stereo camera system includes at least one pair of distance measurement cameras configured to be able to change an image processing range or a long-baseline-length stereo camera including the at least one pair of distance measurement cameras, and
the distance measurement method includes:

capturing an image of an object present in an own angle of view range by using the at least one pair of distance measurement cameras, and
performing distance measurement of the object based on an image captured by each of the at least one pair of distance measurement cameras by using the long-baseline-length stereo camera.

FIG. 1

EP 3 974 771 A1

# FIG. 2

EP 3 974 771 A1

FIG. 3

FIG. 4

# FIG. 5

EP 3 974 771 A1

# FIG. 6

DISTANCE MEASUREMENT
ACCURACY (ERROR)

DISTANCE MEASUREMENT
CAMERA ALONE

STEREO CAMERA

REQUIRED DISTANCE
MEASUREMENT ACCURACY

THL

DISTANCE

ADOPT DISTANCE MEASUREMENT
RESULT OF DISTANCE
MEASUREMENT CAMERA ALONE

ADOPT DISTANCE MEASUREMENT
RESULT OF STEREO CAMERA

STEREO CAMERA IS LOWER IN
DISTANCE MEASUREMENT ACCURACY
THAN DISTANCE MEASUREMENT CAMERA ALONE

EP 3 974 771 A1

# FIG. 7

DISTANCE MEASUREMENT ACCURACY (ERROR)

DISTANCE MEASUREMENT CAMERA ALONE

STEREO CAMERA

BEFORE CALIBRATION

AFTER CALIBRATION

BEFORE CALIBRATION

AFTER CALIBRATION

REQUIRED DISTANCE MEASUREMENT ACCURACY

THL

DISTANCE

ADOPT DISTANCE MEASUREMENT RESULT OF DISTANCE MEASUREMENT CAMERA ALONE

ADOPT DISTANCE MEASUREMENT RESULT OF STEREO CAMERA

STEREO CAMERA IS LOWER IN DISTANCE MEASUREMENT ACCURACY THAN DISTANCE MEASUREMENT CAMERA ALONE

EP 3 974 771 A1

## FIG. 8

```
            ┌─────────┐
            │  START  │
            └────┬────┘
                 │
  ┌──────────────▼──────────────────────────┐
  │  ┌──────────────────────────────────┐   │
  │  │ PERFORM DISTANCE MEASUREMENT USING│───┼── S1
  │  │  DISTANCE MEASUREMENT CAMERA ALONE│   │
  │  └───────────────┬──────────────────┘   │
  │                  │                       │
  │  ┌───────────────▼──────────────────┐   │
  │  │ PERFORM DISTANCE MEASUREMENT USING│   │
  │  │      STEREO CAMERA INCLUDING      │───┼── S2
  │  │  TWO DISTANCE MEASUREMENT CAMERAS │   │
  │  │       ADJACENT TO EACH OTHER      │   │
  │  └───────────────┬──────────────────┘   │
  │                  │                       │
  │  ┌───────────────▼──────────────────┐   │
  │  │ ADOPT DISTANCE MEASUREMENT RESULT OF│ │
  │  │ STEREO CAMERA FOR DISTANCE EQUAL TO │ │
  │  │OR GREATER THAN DISTANCE THRESHOLD VALUE,│─ S3
  │  │AND ADOPT DISTANCE MEASUREMENT RANGE OF│ │
  │  │    DISTANCE MEASUREMENT CAMERA FOR   │ │
  │  │DISTANCE LESS THAN DISTANCE THRESHOLD VALUE││
  │  └───────────────┬──────────────────┘   │
  └──────────────────┘
```

# FIG. 9

EP 3 974 771 A1

FIG. 10

FIG. 11

FIG. 12

FIG. 13

## FIG. 14

| HYPERBOLOID MIRROR | UPPER SIDE | LOWER OUTER PERIPHERAL SIDE | LOWER INNER PERIPHERAL SIDE |
|---|---|---|---|
| CURVATURE RADIUS r (mm) | 15 | -17 | -22 |
| CONE CONSTANT κ | -3.1 | -2.94 | -130 |
| VERTEX POSITION (mm) | 0 | -18.5056 | -18.5056 |
| CALIBER (mm) | 34 | 25 | 9 |

EP 3 974 771 A1

FIG. 15

## FIG. 16

EP 3 974 771 A1

## FIG. 17

```
                    ┌──────────┐
                    │  START   │
                    └────┬─────┘
                         │
         ┌───────────────┼─────────────────────────────────┐
         │               ▼                                  │
         │   ┌─────────────────────────────────────┐        │
         │   │ PERFORM DISTANCE MEASUREMENT USING   │──S1    │
         │   │ DISTANCE MEASUREMENT CAMERA ALONE    │        │
         │   └─────────────────┬───────────────────┘        │
         │                     ▼                            │
         │   ┌─────────────────────────────────────┐        │
         │   │ CALCULATE SCANNING RANGE OF STEREO   │        │
         │   │ MATCHING OF STEREO CAMERA INCLUDING  │        │
         │   │ TWO DISTANCE MEASUREMENT CAMERAS     │──S1701 │
         │   │ ADJACENT TO EACH OTHER FROM DISTANCE │        │
         │   │ MEASUREMENT RESULT OF DISTANCE       │        │
         │   │ MEASUREMENT CAMERA                   │        │
         │   └─────────────────┬───────────────────┘        │
         │                     ▼                            │
         │   ┌─────────────────────────────────────┐        │
         │   │ PERFORM DISTANCE MEASUREMENT USING   │        │
         │   │ STEREO CAMERA INCLUDING              │──S2    │
         │   │ TWO DISTANCE MEASUREMENT CAMERAS     │        │
         │   │ ADJACENT TO EACH OTHER               │        │
         │   └─────────────────┬───────────────────┘        │
         │                     ▼                            │
         │   ┌─────────────────────────────────────┐        │
         │   │ ADOPT DISTANCE MEASUREMENT RESULT OF │        │
         │   │ STEREO CAMERA FOR DISTANCE EQUAL TO  │        │
         │   │ OR GREATER THAN DISTANCE THRESHOLD   │        │
         │   │ VALUE, AND ADOPT DISTANCE            │──S3    │
         │   │ MEASUREMENT RANGE OF DISTANCE        │        │
         │   │ MEASUREMENT CAMERA FOR DISTANCE LESS │        │
         │   │ THAN DISTANCE THRESHOLD VALUE        │        │
         │   └─────────────────┬───────────────────┘        │
         └─────────────────────┴────────────────────────────┘
```

EP 3 974 771 A1

*FIG. 18*

FIG. 19

EP 3 974 771 A1

## FIG. 20

```
            ┌─────────────┐
            │    START    │
            └──────┬──────┘
                   │
                   ▼
┌──────────────────────────────────────────┐
│  DETERMINE IMAGE EXTRACTION RANGE FOR     │
│  PERFORMING DISTANCE MEASUREMENT IN       │──── S2001
│  ACCORDANCE WITH VEHICLE SPEED            │
└──────────────────┬───────────────────────┘
                   │
                   ▼
┌──────────────────────────────────────────┐
│  PERFORM DISTANCE MEASUREMENT USING       │──── S1
│  DISTANCE MEASUREMENT CAMERA ALONE        │
└──────────────────┬───────────────────────┘
                   │
                   ▼
┌──────────────────────────────────────────┐
│  PERFORM DISTANCE MEASUREMENT USING       │
│  STEREO CAMERA INCLUDING                  │──── S2
│  TWO DISTANCE MEASUREMENT CAMERAS         │
│  ADJACENT TO EACH OTHER                   │
└──────────────────┬───────────────────────┘
                   │
                   ▼
┌──────────────────────────────────────────┐
│  ADOPT DISTANCE MEASUREMENT RESULT OF     │
│  STEREO CAMERA FOR DISTANCE EQUAL TO      │
│  OR GREATER THAN DISTANCE THRESHOLD VALUE,│──── S3
│  AND ADOPT DISTANCE MEASUREMENT RANGE OF  │
│  DISTANCE MEASUREMENT CAMERA FOR          │
│  DISTANCE LESS THAN DISTANCE THRESHOLD VALUE│
└──────────────────────────────────────────┘
```

EP 3 974 771 A1

# FIG. 21

2102a  2101    2102b                    2102c                          2102d

LEFT SIDE          FRONT              RIGHT SIDE                    REAR

EP 3 974 771 A1

*FIG. 22*

1

DISTANCE MEASUREMENT CAMERA — 10a

- SECOND IMAGE-CAPTURING UNIT (13a)
- FIRST IMAGE-CAPTURING UNIT (11a)
- IMAGE EXTRACTION RANGE SELECTION UNIT (2201a)
- IMAGE EXTRACTION UNIT (1902a)
- IMAGE EXTRACTION UNIT (1901a)
- DISTORTION CORRECTION UNIT (14a)
- DISTORTION CORRECTION UNIT (12a)
- DISTANCE CALCULATION UNIT (15a)

IMAGE ACQUISITION UNIT (21)
DISTANCE CALCULATION UNIT (22)
DISTANCE DETERMINATION UNIT (23)
20 (DISTANCE MEASUREMENT CAMERA)

DISTANCE MEASUREMENT CAMERA — 10b

- IMAGE EXTRACTION RANGE SELECTION UNIT (2201b)
- FIRST IMAGE-CAPTURING UNIT (11b)
- SECOND IMAGE-CAPTURING UNIT (13b)
- IMAGE EXTRACTION UNIT (1901b)
- IMAGE EXTRACTION UNIT (1902b)
- DISTORTION CORRECTION UNIT (12b)
- DISTORTION CORRECTION UNIT (14b)
- DISTANCE CALCULATION UNIT (15b)

42

# FIG. 23

START

DETERMINE ANGLE OF VIEW FOR PERFORMING
DISTANCE MEASUREMENT IN ACCORDANCE
WITH ROAD CONDITION — S2301

PERFORM DISTANCE MEASUREMENT USING
DISTANCE MEASUREMENT CAMERA ALONE — S1

PERFORM DISTANCE MEASUREMENT USING
STEREO CAMERA INCLUDING
TWO DISTANCE MEASUREMENT CAMERAS
ADJACENT TO EACH OTHER — S2

ADOPT DISTANCE MEASUREMENT RESULT OF
STEREO CAMERA FOR DISTANCE EQUAL TO
OR GREATER THAN DISTANCE THRESHOLD VALUE,
AND ADOPT DISTANCE MEASUREMENT RANGE OF
DISTANCE MEASUREMENT CAMERA FOR
DISTANCE LESS THAN DISTANCE THRESHOLD VALUE — S3

FIG. 24

# FIG. 25

FIG. 26

FIG. 27

# FIG. 28

EP 3 974 771 A1

FIG. 29

EP 3 974 771 A1

# FIG. 30

```
                    ( START )
                         │
                         ▼
    ┌─────────────────────────────────────────┐
    │   PERFORM DISTANCE MEASUREMENT USING     │──── S1
    │   DISTANCE MEASUREMENT CAMERA ALONE      │
    └─────────────────────────────────────────┘
                         │
                         ▼
    ┌─────────────────────────────────────────┐
    │   PERFORM DISTANCE MEASUREMENT USING     │
    │         STEREO CAMERA INCLUDING          │──── S2
    │     TWO DISTANCE MEASUREMENT CAMERAS     │
    │          ADJACENT TO EACH OTHER          │
    └─────────────────────────────────────────┘
                         │
                         ▼
    ┌─────────────────────────────────────────┐
    │   ADOPT DISTANCE MEASUREMENT RESULT OF   │
    │   STEREO CAMERA FOR DISTANCE EQUAL TO    │
    │ OR GREATER THAN DISTANCE THRESHOLD VALUE,│──── S3
    │  AND ADOPT DISTANCE MEASUREMENT RANGE OF │
    │      DISTANCE MEASUREMENT CAMERA FOR     │
    │ DISTANCE LESS THAN DISTANCE THRESHOLD VALUE│
    └─────────────────────────────────────────┘
                         │
                         ▼
    ┌─────────────────────────────────────────┐
    │ SPECIFY RANGE IN WHICH IMAGE RECOGNITION │
    │        SHOULD BE PERFORMED FROM          │──── S3001
    │       DISTANCE MEASUREMENT RESULT        │
    └─────────────────────────────────────────┘
                         │
                         ▼
    ┌─────────────────────────────────────────┐
    │      PERFORM IMAGE RECOGNITION USING     │──── S3002
    │    FORWARD DISTANCE MEASUREMENT CAMERA    │
    └─────────────────────────────────────────┘
```

## FIG. 31

START

PERFORM DISTANCE MEASUREMENT USING DISTANCE MEASUREMENT CAMERA ALONE — S1

PERFORM DISTANCE MEASUREMENT USING FORWARD DISTANCE MEASUREMENT CAMERA — S3101

PERFORM DISTANCE MEASUREMENT USING STEREO CAMERA INCLUDING TWO DISTANCE MEASUREMENT CAMERAS ADJACENT TO EACH OTHER — S2

ADOPT DISTANCE MEASUREMENT RESULT OF STEREO CAMERA FOR DISTANCE EQUAL TO OR GREATER THAN DISTANCE THRESHOLD VALUE, AND ADOPT DISTANCE MEASUREMENT RANGE OF DISTANCE MEASUREMENT CAMERA FOR DISTANCE LESS THAN DISTANCE THRESHOLD VALUE — S3

COMPARE DISTANCE MEASUREMENT RESULT IN S3101 WITH DISTANCE MEASUREMENT RESULT IN S3 — S3102

CORRECT PARAMETERS OF DISTORTION CORRECTION OF FORWARD DISTANCE MEASUREMENT CAMERA — S3103

# FIG. 32

DISTANCE MEASUREMENT
ACCURACY (ERROR)

FORWARD DISTANCE
MEASUREMENT CAMERA

LONG-BASELINE-LENGTH
STEREO CAMERA

REQUIRED DISTANCE
MEASUREMENT ACCURACY

THL

DISTANCE

ADOPT DISTANCE MEASUREMENT
RESULT OF FORWARD DISTANCE
MEASUREMENT CAMERA

ADOPT DISTANCE MEASUREMENT
RESULT OF LONG-BASELINE-LENGTH
STEREO CAMERA

EP 3 974 771 A1

# EP 3 974 771 A1

<div align="center">

**INTERNATIONAL SEARCH REPORT**

</div>

| | International application No. |
|---|---|
| | PCT/JP2020/016150 |

| A. CLASSIFICATION OF SUBJECT MATTER |
|---|
| G01C 3/06(2006.01)i; G06T 7/593(2017.01)i<br>FI: G01C3/06 119V; G01C3/06 140; G06T7/593<br>According to International Patent Classification (IPC) or to both national classification and IPC |

| B. FIELDS SEARCHED |
|---|
| Minimum documentation searched (classification system followed by classification symbols)<br>G01C3/06; G06T7/593; G06T1/00; G08G1/16; H04N5/225 |

| Documentation searched other than minimum documentation to the extent that such documents are included in the fields searched | |
|---|---|
| Published examined utility model applications of Japan | 1922–1996 |
| Published unexamined utility model applications of Japan | 1971–2020 |
| Registered utility model specifications of Japan | 1996–2020 |
| Published registered utility model applications of Japan | 1994–2020 |

| Electronic data base consulted during the international search (name of data base and, where practicable, search terms used) |
|---|
| |

| C. DOCUMENTS CONSIDERED TO BE RELEVANT | | |
|---|---|---|
| Category* | Citation of document, with indication, where appropriate, of the relevant passages | Relevant to claim No. |
| Y | JP 2006-33282 A (OLYMPUS CORP.) 02.02.2006 (2006-02-02) paragraphs [0001]-[0040], fig. 1-7 | 1-15 |
| Y | WO 2018/042801 A1 (SONY SEMICONDUCTOR SOLUTIONS CORPORATION) 08.03.2018 (2018-03-08) paragraphs [0092]-[0098], fig. 15 | 1-15 |
| Y | JP 2009-146217 A (HITACHI, LTD.) 02.07.2009 (2009-07-02) paragraphs [0001]-[0085], fig. 1-10 | 1, 3-6, 15 |
| Y | JP 2011-13064 A (NIKON CORP.) 20.01.2011 (2011-01-20) paragraphs [0001]-[0031], fig. 1-7 | 1-2, 6, 15 |
| Y | JP 2006-330735 A (KOREA ADVANCED INSTITUTE OF SCIENCE AND TECHNOLOGY) 07.12.2006 (2006-12-07) paragraphs [0001]-[0065], fig. 1-10C | 6 |
| Y | JP 2007-288444 A (TOYOTA MOTOR CORP.) 01.11.2007 (2007-11-01) paragraphs [0015]-[0094], fig. 1-11 | 7-10 |
| Y | JP 11-39596 A (FUJI HEAVY INDUSTRIES LTD.) 12.02.1999 (1999-02-12) paragraphs [0001]-[0066], fig. 1-13 | 11-14 |

| ☐ Further documents are listed in the continuation of Box C. | ☒ See patent family annex. |
|---|---|

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 03 July 2020 (03.07.2020) | 21 July 2020 (21.07.2020) |

| Name and mailing address of the ISA/<br>Japan Patent Office<br>3-4-3, Kasumigaseki, Chiyoda-ku,<br>Tokyo 100-8915, Japan | Authorized officer<br><br>Telephone No. |
|---|---|

Form PCT/ISA/210 (second sheet) (January 2015)

**EP 3 974 771 A1**

<table>
<tr><td colspan="2">**INTERNATIONAL SEARCH REPORT**</td><td>International application No.<br><br>PCT/JP2020/016150</td></tr>
</table>

| Box No. II | Observations where certain claims were found unsearchable (Continuation of item 2 of first sheet) |
| --- | --- |

This international search report has not been established in respect of certain claims under Article 17(2)(a) for the following reasons:

1. ☐ Claims Nos.:
   because they relate to subject matter not required to be searched by this Authority, namely:

2. ☐ Claims Nos.:
   because they relate to parts of the international application that do not comply with the prescribed requirements to such an extent that no meaningful international search can be carried out, specifically:

3. ☐ Claims Nos.:
   because they are dependent claims and are not drafted in accordance with the second and third sentences of Rule 6.4(a).

| Box No. III | Observations where unity of invention is lacking (Continuation of item 3 of first sheet) |
| --- | --- |

This International Searching Authority found multiple inventions in this international application, as follows:
See extra sheet

1. ☐ As all required additional search fees were timely paid by the applicant, this international search report covers all searchable claims.

2. ☒ As all searchable claims could be searched without effort justifying additional fees, this Authority did not invite payment of additional fees.

3. ☐ As only some of the required additional search fees were timely paid by the applicant, this international search report covers only those claims for which fees were paid, specifically claims Nos.:

4. ☐ No required additional search fees were timely paid by the applicant.   Consequently, this international search report is restricted to the invention first mentioned in the claims; it is covered by claims Nos.:

**Remark on Protest**   ☐ The additional search fees were accompanied by the applicant's protest and, where applicable, the payment of a protest fee.

☐ The additional search fees were accompanied by the applicant's protest but the applicable protest fee was not paid within the time limit specified in the invitation.

☐ No protest accompanied the payment of additional search fees.

Form PCT/ISA/210 (continuation of first sheet (2)) (January 2015)

**INTERNATIONAL SEARCH REPORT**

| International application No. |
| --- |
| PCT/JP2020/016150 |

<Continuation of Box No. III>

Document 1: JP 2006-33282 A (OLYMPUS CORP.) 02.02.2006 (2006-02-02) paragraphs [0001]-[0040], fig. 1-7 (Family: none)
Document 2: WO 2018/042801 A1 (SONY SEMICONDUCTOR SOLUTIONS CORPORATION) 08.03.2018 (2018-03-08) paragraphs [0092]-[0098], fig. 15 & US 2018/0275278 A1, paragraphs [0120]-[0126], fig. 15 & EP 3508814 A1 & CN 108027238 A & KR 10-2019-0042485 A

(Invention 1) Claims 1-6
Claims 1-6 have the special technical feature of a "stereo camera system comprising: a plurality of distance measurement cameras which capture an image of an object present within an angle of view thereof while measuring the distance to the object; and an integration unit which designates the pair of distance measurement cameras as a long baseline length stereo camera, and measures the distance to the object on the basis of the image captured by each of the pair of distance measurement cameras, wherein an image processing range of the distance measurement cameras or the integration unit can be modified," and are thus classified as invention 1.

(Invention 2) Claims 7-10
Claims 7-10 share, with claim 1 classified as invention 1, the technical feature of a "stereo camera system comprising: a plurality of distance measurement cameras which capture an image of an object present within an angle of view thereof while measuring the distance to the object; and an integration unit which designates the pair of distance measurement cameras as a long baseline length stereo camera, and measures the distance to the object on the basis of the image captured by each of the pair of distance measurement cameras." However, since this technical feature does not make a contribution over the prior art in light of the disclosure of document 1 or document 2, the technical feature cannot be considered a special technical feature. Also, there are no other identical or corresponding special technical features between these inventions.
In addition, claims 7-10 are not dependent on claim 1. Furthermore, claims 7-10 are not substantially identical or equivalent to any of the claims classified as invention 1.
Thus, claims 7-10 cannot be classified as invention 1.
Also, claims 7-10 have the special technical feature of a "stereo camera system comprising: a plurality of distance measurement cameras which capture an image of an object present within an angle of view thereof while measuring the distance to the object; and an integration unit which designates the pair of distance measurement cameras as a long baseline length stereo camera, and measures the distance to the object on the basis of the image captured by each of the pair of distance measurement cameras, wherein the integration unit is configured to optimize the angle of view of the distance measurement cameras according to a mounting place of a vehicle," and are thus classified as invention 2.

Form PCT/ISA/210 (extra sheet) (January 2015)

**INTERNATIONAL SEARCH REPORT**

International application No.

PCT/JP2020/016150

(Invention 3) Claims 11-14

Claims 11-14 share, with claim 1 classified as invention 1 and claim 3 classified as invention 2, the technical feature of a "stereo camera system comprising: a plurality of distance measurement cameras which capture an image of an object present within an angle of view thereof while measuring the distance to the object; and an integration unit which designates the pair of distance measurement cameras as a long baseline length stereo camera, and measures the distance to the object on the basis of the image captured by each of the pair of distance measurement cameras." However, since this technical feature does not make a contribution over the prior art in light of the disclosure of document 1 or document 2, the technical feature cannot be considered a special technical feature. Also, there are no other identical or corresponding special technical features between these inventions.

In addition, claims 11-14 are not dependent on claim 1 or 7. Furthermore, claims 11-14 are not substantially identical or equivalent to any of the claims classified as invention 1 or 2.

Thus, claim 11-14 cannot be classified as either invention 1 or 2.

Also, claims 11-14 have the special technical feature of a "stereo camera system comprising: a plurality of distance measurement cameras which capture an image of an object present within an angle of view thereof while measuring the distance to the object; an integration unit which designates the pair of distance measurement cameras as a long baseline length stereo camera, and measures the distance to the object on the basis of the image captured by each of the pair of distance measurement cameras; a forward distance measurement camera; and a vehicle control unit, wherein angular resolution of the forward distance measurement camera is higher than angular resolution of the distance measurement cameras," and are thus classified as invention 3.

Form PCT/ISA/210 (extra sheet) (January 2015)

International application No.

PCT/JP2020/016150

| Patent Documents referred in the Report | Publication Date | Patent Family | Publication Date |
|---|---|---|---|
| JP 2006-33282 A | 02 Feb. 2006 | (Family: none) | |
| WO 2018/042801 A1 | 08 Mar. 2018 | US 2018/0275278 A1 paragraphs [0120]-[0126], fig. 15 EP 3508814 A1 CN 108027238 A KR 10-2019-0042485 A | |
| JP 2009-146217 A | 02 Jul. 2009 | US 2009/0153664 A1 paragraphs [0001]-[0114], fig. 1-10 EP 2071491 A1 | |
| JP 2011-13064 A | 20 Jan. 2011 | (Family: none) | |
| JP 2006-330735 A | 07 Dec. 2006 | US 2006/0268103 A1 paragraphs [0001]-[0055], fig. 1-10C KR 10-2006-0124877 A CN 1870759 A | |
| JP 2007-288444 A | 01 Nov. 2007 | (Family: none) | |
| JP 11-39596 A | 12 Feb. 1999 | (Family: none) | |

Form PCT/ISA/210 (patent family annex) (January 2015)

**REFERENCES CITED IN THE DESCRIPTION**

**Patent documents cited in the description**

- JP 2006033282 A